(19) Europäisches Patentamt
European Patent Office
Office européen des brevets

(11) EP 3 456 762 B1

(12) EUROPÄISCHE PATENTSCHRIFT

(45) Veröffentlichungstag und Bekanntmachung des Hinweises auf die Patenterteilung:
06.01.2021 Patentblatt 2021/01

(51) Int Cl.:
C08J 7/04 (2020.01)    B32B 27/08 (2006.01)
B32B 27/36 (2006.01)   A01G 9/14 (2006.01)
A01G 9/22 (2006.01)

(21) Anmeldenummer: 18192912.6

(22) Anmeldetag: 06.09.2018

(54) **BESCHICHTETE POLYESTERFOLIE MIT EINER PERMANENTEN ANTIFOG-BESCHICHTUNG UND EINER TRANSPARENZ VON MINDESTENS 93%**

COATED POLYESTER FILM WITH A PERMANENT ANTIFOG COATING AND A TRANSPARENCY OF AT LEAST 93%

FEUILLE DE POLYESTER REVÊTUE DOTÉE D'UN REVÊTEMENT ANTIBUÉE PERMANENT ET PRÉSENTANT UNE TRANSPARENCE D'AU MOINS 93 %

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 14.09.2017 DE 102017216258

(43) Veröffentlichungstag der Anmeldung:
20.03.2019 Patentblatt 2019/12

(73) Patentinhaber: Mitsubishi Polyester Film GmbH
65203 Wiesbaden (DE)

(72) Erfinder:
• Lohre, Claudia
  65195 Wiesbaden (DE)
• Kliesch, Holger
  65462 Ginsheim-Gustavsburg (DE)
• Bork, Andreas
  67593 Westhofen (DE)
• Ünker, Yavuz
  55268 Nieder-Olm (DE)
• Fischer, Viktor
  55131 Mainz (DE)

(74) Vertreter: Schweitzer, Klaus
Plate Schweitzer Zounek
Patentanwälte
Rheingaustrasse 196
65203 Wiesbaden (DE)

(56) Entgegenhaltungen:
EP-A1- 1 777 251        EP-A1- 2 216 362
DE-A1-102016 200 875    US-A1- 2010 297 451

• PASCAL BUSKENS ET AL: "Antireflective Coatings for Glass and Transparent Polymers", LANGMUIR, Bd. 32, Nr. 27, 17. Mai 2016 (2016-05-17), Seiten 6781-6793, XP055556199, US ISSN: 0743-7463, DOI: 10.1021/acs.langmuir.6b00428
• ANONYMOUS: "ASTM D1003-13 Standard Test Method for Haze and Luminous Transmittance of Transparent Plastics", ASTM BOOK OF STANDARDS VOLUME: 08.01, , Bd. 8.01 1. Januar 2013 (2013-01-01), Seiten 222-228, XP009506130, DOI: 10.1520/D1003 Gefunden im Internet: URL:https://www.astm.org/Standards/D1003.htm

**Beschreibung**

**Gebiet der Erfindung**

Die Erfindung betrifft eine beschichtete Polyesterfolie welche mindestens einseitig mit einer permanenten Antifog- Beschichtung ausgestattet ist. Die erfindungsgemäße Folie eignet sich zur Herstellung von Gewächshausschattenmatten und weist spezielle Transparenzeigenschaften, permanente Antifog-Eigenschaften und eine hohe UV-Stabilität auf. Die Erfindung betrifft ferner Verfahren zur Herstellung der erfindungsgemäßen Polyesterfolie sowie ihre Verwendung.

**Hintergrund**

Folien für Gewächshausschattenmatten in Gewächshäusern müssen eine Reihe von Anforderungen erfüllen. Zum einen soll der für das Pflanzenwachstum benötigte Teil des Lichtes durch die Folie/Schattenmatte hindurchgehen und der nicht benötigte Teil des Lichts, der zu einer übermäßigen Erwärmung des Gewächshauses führen würde, reflektiert werden. In der Nacht und in den frühen Morgenstunden soll die Schattenmatte zudem die vom Boden aufsteigende Wärme sowohl durch Konvektionsbremse, als auch wiederum durch Reflektion und Rückstrahlung im Gewächshaus halten und somit für einen optimalen Lichteinfall sorgen. Im photosynthetischen Wellenlängenbereich muss eine hohe Lichtdurchlässigkeit gegeben sein, da dieser von den Pflanzen für ein optimales Pflanzenwachstum benötigt wird. Die Lichtdurchlässigkeit soll bei Witterungsbedingungen, bei denen sich Kondenswasser an den Schattenmatten bildet, nach Möglichkeit nicht beeinträchtigt werden.

Der Begriff Antifog (Anti-Beschlag) wird verwendet, um Wassertropfen auf der Oberfläche von transparenten Kunststofffolien zu beschreiben. Aufgrund der typischerweise hohen Luftfeuchtigkeit im Gewächshaus entsteht bei entsprechenden Witterungsbedingungen (z.B. Temperaturdifferenzen zwischen Tag und Nacht) Kondenswasser in Form von Wassertropfen insbesondere auf der Oberfläche der pflanzenzugewandten Seite von Gewächshausschattenmatten. Neben den Witterungsbedingungen, begünstigt die unterschiedliche Oberflächenspannung von Wasser und Kunststoff die Kondenswasserbildung. Folien mit Antifog-Eigenschaften verhindern die Wassertropfenbildung und ermöglichen eine beschlagfreie Sicht durch die Kunststofffolie. Im Allgemeinen können Antifog-Additive während des Extrusionsprozesses in die Polymermatrix eingearbeitet oder als Beschichtung auf die Polymermatrix aufgetragen werden. Derartige Antifog-Additive sind allgemein bivalente Verbindungen, die einen unpolaren aliphatischen Bereich zur Verankerung in der Polymermatrix und einen polaren hydrophilen Bereich haben, der mit Wasser wechselwirken kann und die Oberflächenspannung der Wassertropfen so herabsetzt, dass sich ein kontinuierlicher transparenter Wasserfilm (aufgrund einer hydrophilen Oberfläche) auf der Folienoberfläche ausbildet. Durch den Einsatz von Antifog-Additiven sollte die Lichtdurchlässigkeit und somit die Transparenz der Gewächshausfolien nicht negativ beeinflusst werden, um den Ernteertrag nicht zu vermindern. Die Wassertröpfchen wirken im Gegensatz zu einem Flüssigkeitsfilm stark lichtstreuend und verstärkt reflektierend, die insbesondere in den lichtarmen Morgenstunden zu einer deutlich geringeren Photosynthese führen. Des Weiteren wird die Fäulnisbildung von Pflanzen, Pflanzenteilen durch nicht haftende bzw. heruntertropfende Wassertropfen vermieden und Verbrennungserscheinungen von Pflanzen, Pflanzenteilen durch Tropfen die auf der Folienoberfläche bei Lichteinfall wie eine Brennlinse fungieren, reduziert. Weiterhin wäre es wünschenswert, wenn die Gewächshausfolie eine UV-Stabilität aufweist, die es ermöglicht die Schattenmatte mindestens 5 Jahre in einem Gewächshaus im Einsatz zu lassen, ohne dabei signifikant zu vergilben, Versprödungen oder Rissbildungen an der Oberfläche zu zeigen und in den mechanischen Eigenschaften gravierend nachzulassen oder deutlich an Transparenz zu verlieren. Für den Fall, dass es bei sehr starker Kondenswasserbildung dennoch zu einer Tröpfchenbildung kommt, darf die Antifog-Komponente keine giftigen bzw. besonders umweltschädigenden Substanzen enthalten. Unter den unerwünschten Substanzen sind insbesondere Alkylphenolethoxylate zu nennen, die in Antifog-Systemen häufig zum Einsatz kommen (z.B. WO 1995018210).

**Stand der Technik**

Generell werden grenzflächenaktive Beschichtungen basierend auf hydrophilen wasserlöslichen Polymeren und/oder Tenside zur Beschichtung der Oberflächen von Kunststofffolien eingesetzt, um einen Antifog-Effekt zu erzielen. Die Tenside können dabei nichtionischer, kationischer, anionischer oder zwitterionischer Natur sein. Weiterhin sind polymere Tenside oder Schutzkolloide als Antifog-Mittel einsetzbar. Weitere gängige Komponenten für eine Antifog-Beschichtung sind bspw. Fettsäureester und deren Derivate, aliphatische Alkohole und deren Ester, mehrfach ethoxylierte aromatische Alkohole, ein oder mehrfache veresterte Sorbitolester, ein oder mehrfach veresterte Glycerolester, gemischte Glycerolester, oder z.B. ethoxylierte Amine. Typisch sind bspw. Wirkstoffkombinationen aus den drei Substanzklassen wie Glycerolester, Sorbitolester und ethoxylierte Amine. Geeignete Substanzen, die als Antifog-Additive eingesetzt werden, sind bspw. in der WO 97/22655 A1 beschrieben. Ein grundlegendes Problem wasserlöslicher Polymere und oder Tenside stellt die leichte Abwaschbarkeit der Beschichtung dar, wodurch eine permanente Antifog-Wirkung nicht realisiert werden kann. Gängige Polyesterfolien mit einer Antifog-Beschichtung werden in EP 1647568 B1 und EP 1777251 B1 beschrieben. Diese Polyesterfolien haben gute mechanische Eigenschaften, zeigen jedoch eine niedrigere Transparenz. Des Weiteren weisen sie eine geringere Langzeitstabilität unter Bewitterung auf. Außerdem hat die Antifog-Wirkung dieser Polyesterfolien nur eine geringe Lebensdauer von einigen Monaten, da sich die entsprechenden Antifog-Additive leicht abwaschen lassen und im Wasser löslich sind, so dass die Wirksubstanz beim Einsatz als Gewächshausschattenmatte schnell verbraucht wird. EP 1152027 A1, EP 1534776 A1 und EP 2216362 A1 beschreiben Polyolefinfolien basierend auf PVC, LDPE und EVA mit langanhaltenden Antifog-Eigenschaften für Lebensmittelverpackungen und Anwendungen für Gewächshausanwendungen unter Verwendung von Antifog-Additiven basierend auf inorganischen hydrophilien kolloidalen Substanzen (kolloidalem Silizium, Aluminium und weiteren) und nichtionischen, anionischen oder kationischen oberflächenaktiven Additiven. Diese zeigen zwar permanente Antifog-Eigenschaften, weisen jedoch im Gegensatz zu Polyesterbasierten Gewächshausschattenmatten stark verminderte mechanische Eigenschaften auf. Der Einsatz von Polyolefinbasierten Folien kann für die Zielanwendung kategorisch ausgeschlossen werden, da die gewünschte Langzeitstabilität und in Folge die Langzeitlebensdauer von 5 Jahren aufgrund der schnelleren UV-Degradierung von PE im Vergleich zu PET nicht realisiert werden kann, wodurch deren Wirtschaftlichkeit negativ beeinflusst wird. Außerdem führt die geringere mechanische Stabilität der Polyolefine dazu, dass die Schattenmatte sich verdehnt und ihre weitestgehend geschlossene Struktur verlieren, was zu einer geringeren Isolationswirkung führt.

## Aufgabe

Die Polyesterfolien gemäß dem Stand der Technik sind nachteilig, weil sie über keine permanente Antifog-Beschichtung in Verbindung mit einer hohen Transparenz und Langzeitstabilität verfügen. Aufgabe der vorliegenden Erfindung war es eine Polyesterfolie herzustellen, die permanente Antifog-Eigenschaften (im Folgenden auch als Antibeschlag-Eigenschaften bezeichnet) bei gleichzeitig hoher Transparenz von mindestens 93% aufweist und eine UV-Stabilität von mindestens 5 Jahren hat, ohne dabei signifikant zu vergilben und eine Versprödung oder Rissbildung der Oberfläche sowie eine Verschlechterung der für die Anwendung kritischen mechanischen und optischen Eigenschaften zu zeigen. Die Folie soll eine Dicke von 10 bis 40 $\mu$m aufweisen und sich zudem wirtschaftlich auf existierenden Polyesterfolienanlagen, Ein- oder Mehrschichtanlagen herstellen lassen.

Gelöst wird diese Aufgabe durch eine beschichtete Polyesterfolie mit einer Transparenz von mindestens 93% umfassend:

mindestens eine Basisschicht B, die einen thermoplastischen Polyester und einen UV-Stabilisator umfasst; wobei die Polyesterfolie eine erste und eine zweite Oberfläche aufweist, wobei auf mindestens einer der Oberflächen der Polyesterfolie eine permanente Antifog-Beschichtung aufgebracht ist, und wobei die Antifog-Beschichtung einen niedrigeren Brechungsindex aufweist als die Basisschicht B und wobei die Antifog-Beschichtung das Reaktionsprodukt einer Dispersion einer Antifog-Beschichtungszusammensetzung ist, die neben Wasser, a) hygroskopisches, poröses Material, b) einen Vernetzer aus Polymerbasis, c) ein haftvermittelndes organofunktionelles Silan und d) ein oder mehrere Tenside enthält.

## Detailbeschreibung

Bei der Polyesterfolie gemäß der vorliegenden Erfindung handelt es sich um eine biaxial-orientierte Polyesterfolie. Die Gesamtfoliendicke beträgt mind. 10 $\mu$m und maximal 40 $\mu$m. Bevorzugt liegt die Foliendicke bei mindestens 14 $\mu$m und maximal 23 $\mu$m und besonders bevorzugt bei mindestens 14,5 $\mu$m und maximal 20 $\mu$m. Liegt die Foliendicke unter 10 $\mu$m, so reicht die mechanische Festigkeit der Folie nicht mehr aus, um die in der Anwendung in der Energiesparmatte auftretenden Züge ohne Verdehnungen aufzunehmen. Oberhalb von 40 $\mu$m wird die Folie zu steif und im geöffneten, aufgezogenen Zustand entsteht ein zu großer "Folienballen" mit entsprechender zu großer Abschattung.

Eine Schicht im Sinne der vorliegenden Erfindung ist eine Polymerschicht, die mittels Coextrusion gebildet wird. Das heißt, die Polyesterfolie gemäß der vorliegenden Erfindung wird durch eine oder mehrere Schicht(en) gebildet.

Eine Beschichtung im Sine der vorliegenden Erfindung ist das Trocknungsprodukt einer auf die Polyesterfolie aufgebrachten wässrigen Dispersion und nicht Teil des Extrussionsprozesses der Polyesterfolie an sich.

Die Polyesterfolie umfasst eine Basisschicht B. Einschichtige Folien bestehen nur aus dieser Basisschicht. Bei einer mehrschichtigen Ausführungsform besteht die Polyesterfolie aus der (d.h. einer) Basisschicht und mindestens einer weiteren Schicht A. Die Polyesterfolie kann eine weitere Schicht C umfassen. Wenn die Folie zwei weitere Schichten A und C umfasst, so bildet die Basisschicht B eine Zwischenschicht. Die Polyesterfolie weist eine erste und eine zweite Oberfläche auf. Im Falle einer einschichtigen Folie, bilden die Oberflächen der Basisschicht B die Oberflächen der Polyesterfolie. Wenn die Polyesterfolie eine Basisschicht B und eine weitere Schicht A oder C umfasst, bildet die Oberfläche der Basisschicht, die der weiteren Schicht A oder C abgewandt ist eine erste Oberfläche der Polyesterfolie und die Oberfläche der weiteren Schicht A oder C, die der Basisschicht abgewandt ist, bildet die zweite Oberfläche der Polyesterfolie. Wenn die Polyesterfolie eine Basisschicht B und zwei weitere Schichten A und C umfasst, bildet die Oberfläche der Schicht A, die der Basisschicht abgewandt ist eine erste Oberfläche der Polyesterfolie und die Oberfläche der Schicht C, die der Basisschicht abgewandt ist, bildet die zweite Oberfläche der Polyesterfolie. Bei der mehrschichtigen Ausführung ist die Dicke der Basisschicht mindestens genauso groß wie die Summe der übrigen Schichtdicken. Bevorzugt liegt die Dicke der Basisschicht bei mindestens 55 % der Gesamtfoliendicke und besonders bevorzugt bei mindestens 63 % der Gesamtfoliendicke. Die Dicke der übrigen Schichten beträgt mindestens 0,5 $\mu$m, bevorzugt mindestens 0,6 $\mu$m und besonders bevorzugt mindestens 0,7 $\mu$m. Die Dicke der weiteren Schichten A und/oder C beträgt maximal 3 $\mu$m und bevorzugt maximal 2,5 $\mu$m und besonders bevorzugt maximal 1,5 $\mu$m. Unterhalb von 0,5 $\mu$m sinkt die Prozessstabilität und die Dickengleichmäßigkeit der weiteren Schicht. Ab 0,7 $\mu$m wird eine sehr gute Prozessstabilität erreicht. Wenn die Schichten A und/oder C zu dick werden sinkt die Wirtschaftlichkeit, da aus Gründen der Eigenschaftssicherung (insbesondere der UV-Stabilität), Regenerate nur der Basis zugeführt werden sollten und bei zu geringer Basisschichtdicke im Vergleich zur Gesamtdicke muss dieser Schicht dann prozentual zu viel Regenerat zugeführt werden, um den Regeneratkreislauf zu schließen. Dies kann dann auch über die Basisschicht die Eigenschaften wie z.B. UV-Stabilität und Transparenz negativ beeinflussen. Zudem enthalten die weiteren Schichten A und/oder C (bei mehrschichtigen Ausführungsformen) in der Regel Partikel zur Verbesserung der Schlupfeigenschaften (Verbesserung der Wickelbarkeit). Diese Partikel führen zu einem Transparenzverlust durch Rückstreuung. Wird der Anteil der weiteren Schichten A und/oder C mit solchen Partikeln zu groß, wird das Erreichen der erfindungsgemäßen Transparenzeigenschaften deutlich erschwert.

Hohe Schichtdicken der gegebenenfalls vorhandenen Folienschicht C, die eine Antireflexmodifikation darstellt, führen infolge des bei Copolymer-modifizierten Schichten notwendigen höheren UV-Stabilisatorgehalts dieser Schicht zu einer unerwünschten Kostensteigerung.

Die Basisschicht B und die Schichten A und/ oder C (sofern die Schicht C keine Antireflexmodifikation darstellt) bestehen mind. zu 70 Gew.-% aus einem thermoplastischen Polyester, die restlichen Bestsandteile werden durch Additive wie UV-Stabilisatoren, Partikel, Flammschutzmittel, Polyolefine, COC's und sonstige Additive und/oder Polyester kompatible Polymere, wie z.B. Polyamide gebildet. Erfindungsgemäß sind die sonstigen Additive und/oder Polyester kompatible Polymere (wie z.B. Polyamide) zu weniger als 20 Gew.-%, bevorzugt zu weniger als 2 Gew.-% und besonders bevorzugt gar nicht in der Basisschicht B und den Schichten A und/ oder C enthalten. Der Einsatz von sonstigen Additiven und/oder Polymeren kann bei der Rückführung des Regenerats im Folienherstellungsprozess zu einer unerwünschten Gelbfärbung der Folie führen, wodurch der Regeneratanteil reduziert werden muss und somit die Wirtschaftlichkeit des Prozesses herabgesetzt wird. Weiterhin kann der Einsatz von sonstigen Additiven zu einer Verschlechterung der mechanischen Eigenschaften der Folie führen.

Als geeignete Polyester haben sich unter anderem Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), 2,5-Furandicarbonsäure und Ethylenglykol, sowie aus beliebigen Mischungen der genannten Carbonsäuren und Diole erwiesen. Bevorzugt sind Polyester, die zu mindestens 85 Mol-%, bevorzugt mindestens 90 Mol-% und besonders bevorzugt zu mindestens 92 Mol-% aus Ethylenglykol und Terephthalsäure abgeleiteten Einheiten bestehen. Der Einsatz von Naphthalin-2,6-dicarbonsäure hat gegenüber dem Einsatz von Terephthalsäure keine Vorteile, so dass bedingt durch den höheren Preis von Naphthalin-2,6-dicarbonsäure üblicherweise auf diese verzichtet wird. 2,5-Furandicarbonsäure kommt aufgrund des höheren Preises in der Regel nicht zum Einsatz. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel HO-$(CH_2)$n-OH, wobei n bevorzugt kleiner 10 ist, Cyclohexandimethanol, Butandiol, Propandiol, etc. Geeignete andere Dicarbonsäuren sind z.B. Isophthalsäure, Adipinsäure etc. Es hat sich als günstig für die Laufsicherheit und die Bewitterungsstabilität in Gewächshausanwendungen erwiesen, wenn die Folie weniger als 2 Gew.-%, bevorzugt weniger als 1,5 Gew.-% Diethylenglykol (bezogen auf das Gesamtgewicht des Polyesters der Schicht) bzw. die von Diethylenglykol abgeleiteten Einheiten enthält. Es hat sich aus den gleichen Gründen als günstig erwiesen, wenn die Basisschicht B und die Schichten A und/ oder C weniger als 12 Mol-%, bevorzugt weniger als 8 Mol-% und idealerweise weniger als 5 Mol-% Isophthalsäure (IPA) bzgl. der Dicarbonsäure-Komponente des Polyesters enthalten. Es hat sich weiterhin als günstig erwiesen, wenn die Basisschicht B und die Schichten A und/ oder C weniger als 3 Mol-%, bevorzugt weniger als 1 Mol-% CHDM (1,4-Cyclohexandimethanol) bzgl. der Diol-Komponente des Polyesters enthalten. Wenn der Gehalt an den genannten Co-Monomeren, insbesondere der von CHDM, die genannten Grenzen nicht überschreitet ist die UV-Stabilität der aus der Folie hergestellten Energiesparmatten signifikant besser, als bei Ausführungen in denen die Grenzen überschritten werden.

Wird die Schicht C durch Co-Extrusion auf die Basisschicht B aufgebracht, die eine Antireflex-Modifikation gemäß der vorliegenden Erfindung bildet und der Antifog-Beschichtung gegenüberliegt, so enthält diese Schicht C in den weiter unten angegebenen Mengen Co-Monomere. Bei einer einschichtigen Ausführungsform (Mono-Folie) wird die Folie durch die Basisschicht B dargestellt.

Für die Herstellung der erfindungsgemäßen Folie wird der SV-Wert der eingesetzten Polyesters so gewählt, dass die Folie einen SV-Wert von größer 600, bevorzugt von größer 650 und besonders bevorzugt von größer 700 aufweist. Der SV-Wert der Folie ist dabei kleiner 950 und bevorzugt kleiner 850. Liegt der SV-Wert unterhalb von 600, so wird die Folie schon bei der Herstellung so brüchig, dass es zu häufigen Abrissen kommt. Zudem kommt es in den Endanwendungen zu einem schnelleren weiteren Viskositätsverlust unter Verlust der Flexibilität der Folien mit Bruchfolge. Außerdem werden die weiter unten genannten mechanischen Festigkeiten bei geringerem SV-Wert nicht mehr sicher erreicht. Wenn die Folie einen höheren SV als 950 aufweisen soll, dann müssten die eingesetzten Polymere ebenfalls einen mittleren SV von mindestens 950 haben. Diese würden dann in der Schmelze im Extruder so zäh bleiben, dass übermäßig hohe Ströme beim Betrieb der Extruder-Elektromotoren auftreten und es zu Druckschwankungen in der Extrusion kommen würde, was zu einer schlechten Laufsicherheit führen würde.

Die Polyesterfolie kann transparent, opak, glänzend oder matt sein. Diese verschiedenen optischen Eigenschaften erreicht man beispielsweise durch die Zugabe von unterschiedlichen Mengen an Additiven wie Bariumsulfat, Calciumcarbonat, amorpher Kieselsäure oder Titandioxid. Diese Additive können sowohl in der Basisschicht B als auch in der Schicht C enthalten sein. Mattierende oder opakisierende Additive können nur in Mengen zugegeben werden, die die erfindungsgemäße Transparenz nicht gefährden.

Die Folie muss zudem eine geringe Transmission im Wellenlängenbereich von unterhalb 370 nm bis 300 nm aufweisen. Diese liegt bei jeder Wellenlänge im angegebenen Bereich bei kleiner 40 % bevorzugt bei kleiner 30 % und besodners bevorzugt bei kleiner 15 %. Hierdurch wird die Folie vor Versprödung und Vergilbung geschützt, zudem werden hierdurch die Pflanzen und Installationen im Gewächshaus vor dem UV-Licht geschützt. Zwischen 390 und 400 nm liegt die Transparenz bei größer 20 %, bevorzugt bei größer 30 % und besonders bevorzugt bei größer 40 %, da dieser Wellenlängenbereich bereits deutlich Photosyntheseaktiv ist und das Pflanzenwachstum bei zu starker Filterung in diesem Wellenlängenbereich negativ beeinflusst würde. Die geringe UV Durchlässigkeit wird durch den Zusatz von organischem UV-Stabilisator erzielt. Eine geringe Durchlässigkeit für UV-Licht schützt den gegebenenfalls vorhandenen Flammstabilisator vor schneller Zerstörung und starker Vergilbung. Der organische UV-Stabilisator wird dabei aus der Gruppe der Triazine, Benzotriazole oder Benzoxazinone ausgewählt. Besonders bevorzugt sind dabei Triazine, u.a. weil sie bei den für PET üblichen Verarbeitungstemperaturen von 275 - 310°C eine gute thermische Stabilität und eine geringe Ausgasung aus der Folie aufweisen. Insbesondere geeignet ist 2-(4,6-Diphenyl-1,3,5-triazin-2-yl)-5-(hexyl)oxyphenol (Tinuvin® 1577). Besonders bevorzugt sind dabei 2-(2'-hydroxyphenyl)-4,6- bis(4-phenylphenyl) Triazine, wie sie z.B. von der BASF unter dem Markennamen Tinuvin 1600™ vertrieben werden. Werden diese eingesetzt, können die bevorzugten niedrigen Transparenzen unterhalb von 370 nm schon bei geringeren Stabilisator-Konzentrationen erreicht werden, wobei gleichzeitig eine höhere Transparenz bei Wellenlängen oberhalb von 390 nm erreicht wird.

Die Folie, bzw. im Fall einer Mehrschichtfolie alle Folienschichten enthalten mindestens einen organischen UV-Stabilisator. UV-Stabilisatoren werden der/den Schicht/ten bzw. der Monofolie in einer bevorzugten Ausführungsform in Mengen zwischen 0,3 und 3 Gew.-%, bezogen auf das Gewicht der jeweiligen Schicht, zugegeben. Besonders bevorzugt ist ein UV-Stabilisatorgehalt zwischen 0,75 und 2,8 Gew.-%. Idealerweise enthalten die Schichten A und/oder C zwischen 1,2 und 2,5 Gew.-% UV-Stabilisator. Der Gehalt an UV-Stabilisator in Gew.-% in der Basisschicht ist bevorzugt niedriger, als in der/den Schicht(en) A und/oder C. Diese angegebenen Gehalte in der/den Schichten A und/oder C beziehen sich auf Triazinderivate. Wird statt eines Triazinderivats komplett oder teilweise ein UV-Stabilisator aus der Gruppe der Benzotriazole oder Benzoxazinone eingesetzt, so muss der ersetzte Anteil der Triazin-Komponente durch die 1,5 fache Menge einer Benzotriazol- oder Benzoxazinon-Komponente substituiert werden.

Weißfärbende, jedoch mit dem Hauptbestandteil Polyester inkompatible Polymere, wie Polypropylen, Cyclooefincopolymere (COC's), Polyethylen, unvernetztes Polystyrol etc. sind im Sinne der Erfindung zu weniger als 0,1 Gew.-% (bezogen auf das Gewicht der Folie) und idealerweise überhaupt nicht (zu 0 Gew.-%) enthalten, da diese die Transparenz stark senken und das Brandverhalten negativ beeinflussen, und unter UV-Einfluss zu starker Vergilbung neigen und daher erhebliche zusätzliche Mengen an UV-Stabilisator benötigt würden, was die Wirtschaftlichkeit deutlich verschlechtert.

Basisschicht B und die weitere Schicht(en) A und/oder C können Partikel zur Verbesserung der Wickelbarkeit enthalten. Solche anorganischen oder organischen Partikel sind z. B. Kalziumcarbonat, Apatit, Siliziumdioxide, Aluminiumoxid, vernetztes Polystyrol, vernetztes Polymethylmethacrylat (PMMA), Zeolithe und andere Silikate wie Aluminiumsilikate, oder auch Weißpigmente wie $TiO_2$ oder $BaSO_4$. Diese Partikel werden bevorzugt den Schichten A und/oder C zur Verbesserung der Wickelbarkeit der Folie zugegeben. Wenn solche Partikel zugegeben werden, ist die Verwendung von Siliziumdioxid basierten Partikeln bevorzugt, da diese wenig Transparenz reduzierend wirken. Der Anteil dieser oder anderer Partikel beträgt in keiner Schicht mehr als 3 Gew.-% und liegt bevorzugt bei unter 1 Gew.-% und besonder bevorzugt bei unter 0,2 Gew.-% in jeder Schicht, jeweils bezogen auf das Gesamtgewicht der betreffenden Schicht. Diese Partikel werden im Fall einer mehrschichtigen Ausführungsform bevorzugt nur einer oder beiden Schichten A und/oder B zugesetzt und gelangen nur zu einem geringen Anteil über das Regenerat in die Basisschicht. So wird eine minimale Reduktion der Transparenz durch die für die Wicklung benötigten Partikel erreicht. Bevorzugt enthält mindestens eine Außenschicht mindestens 0,07 Gew.-% dieser Partikel.

Da Brände in Gewächshäusern eine Quelle hoher wirtschaftlicher Schäden sind, muss die Folie eine reduzierte Entflammbarkeit aufweisen.

Für das Erreichen eines für Gewächshausenergiesparmatten geeigneten Brandverhaltens werden keine Flammschutzmittel benötigt, wenn die Gehalte an Partikeln, sowie Weißpigmenten und inkompatiblen Polymeren innerhalb der bevorzugten oder besser innerhalb der besonders bevorzugten Bereiche liegen (die Folie erreicht dann eine Note im Brandtest von 4 oder kleiner). Werden Gehalte höher als die bevorzugten Gehalte bei einer der genannten Gruppen verwendet, oder wird für eine besondere Gewächshausanwendung ein noch weiter verbessertes Brandverhalten benötigt, so hat es sich als günstig erwiesen, wenn die Folie zudem ein Flammschutzmittel auf Basis von phosphororganischen Verbindungen enthält. Bevorzugt sind dies Ester der Phosphorsäure oder Phosphonsäure. Flammschutzmittel, die für den Einsatz in den erfindungsgemäßen Polyesterfolien geeignet sind, werden zum Beispiel in EP1368405 B1 beschrieben.

Die erfindungsgemäße Folie weist eine Transparenz von mindestens 93 % auf, bevorzugt liegt die Transparenz bei 94 %, besonders bevorzugt bei 94,5 % und ganz besonders bevorzugt bei mindestens 95 %. Je höher die Transparenz, desto besser wird das Pflanzenwachstum im Gewächshaus unterstützt.

Erreicht wird die erfindungsgemäße Transparenz, wenn die erfindungsgemäßen Rohstoffe und Additiv- und/oder Partikelgehalte verwendet werden. Hauptsächlich wird die Erhöhung der Transparenz durch die auf mindestens einer Seite befindliche permanente Antifog-Beschichtung, sowie der optional der Antifog-Beschichtung gegenüberliegenden Seite befindlichen Antireflexbeschichtung bzw. Antireflexmodifikation der Schicht C beeinflusst.

### Beschichtungen und Deckschichtmodifikationen

Um die erfindungsgemäße Transparenz von mindestens 93 %, bevorzugt 94 %, besonders bevorzugt 94,5 % und idealerweise von 95 % zu erreichen, muss die unbeschichtete biaxial-orientierte Polyesterfolie eine Transparenz von mindestens 91 % aufweisen und mindestens einseitig mit einer Antifog-Beschichtung ausgestattet sein.

In einer Ausführungsform ist die Polyesterfolie einseitig mit einer Antifog-Beschichtung ausgestattet, die gleichzeitig zur Transparenzerhöhung beiträgt (als Antireflex-Modifikation wirkt). Mit dieser Ausführungsform werden die gewünschten Transparenzwerte erreicht. Dabei muss die unten beschriebene Antifog-Beschichtung einen geringeren Brechungsindex als die Polyesterfolie aufweisen. Der Brechungsindex bei einer Wellenlänge von 589 nm in Maschinenrichtung der Folie liegt dabei unterhalb von 1,64, bevorzugt unterhalb von 1,60 und idealerweise unterhalb von 1,58. Weiterhin muss die Dicke der Antifog-Beschichtung mindestens 60 nm, bevorzugt mindestens 70 nm, besonders bevorzugt mindestens 80 nm betragen und maximal 150 nm, bevorzugt maximal 130 nm, besonders bevorzugt maximal 120 nm. Hierdurch wird eine ideale Transparenzerhöhung im gewünschten Wellenlängenbereich erreicht. Unterhalb einer Schichtdicke von 60 nm trägt die Antifog-Beschichtung nicht mehr zur Transparenzerhöhung bei. Jedoch bleiben bei einer Schichtdicke von mindestens 30 nm die permanenten Antibeschlag-Eigenschaften erhalten. Wird die erfindungsgemäße Schichtdicke von max. 150 nm überschritten, so führt der Mehrantrag zu keiner weiteren Transparenzerhöhung. Weiterhin wird aufgrund des höheren Beschichtungsverbrauchs die Wirtschaftlichkeit der Folie herabgesetzt.

In einer weiteren Ausführungsform weist die Antifog-Beschichtung eine Dicke von mindestens 30 nm und bevorzugt mindestens 40 nm und besonders bevorzugt mindestens 50 nm auf und liegt maximal bei 60 nm. Dadurch wird die erfindungsgemäße permanente Antifog-Wirkung erreicht. Um die erfindungsgemäßen Transparenzwerte von mindestens 93% zu erzielen, muss diese Ausführungsform auf der der Antifog-Beschichtung gegenüberliegenden Folienseite eine Antireflex-Modifikation aufweisen. Diese kann entweder durch eine Antireflex-Beschichtung, oder eine Deckschichtmodifikation mit niedrigerem Brechungsindex als Polyethylenterephthalat gebildet werden.

Wird die Antireflex-Modifikation durch eine Antireflex-Beschichtung dargestellt, so weist diese Beschichtung einen geringeren Brechungsindex als die Polyesterfolie auf. Der Brechungsindex bei einer Wellenlänge von 589 nm in Maschinenrichtung der Folie liegt dabei unterhalb von 1,64, bevorzugt unterhalb von 1,60 und idealerweise unterhalb von 1,58. Besonders geeignet sind Polyacrylate, Silikone und Polyurethane, sowie Polyvinylacetat. Geeignete Acrylate sind beispielsweise in der EP-A-0144948 beschrieben und geeignete Silikone beispielsweise in der EP-A-0769540 beschrieben. Besonders bevorzugt sind Beschichtungen auf Acrylatbasis, da diese im Gewächshaus nicht zum Ausschwitzen von Beschichtungskomponenten bzw. Abblättern von Teilen der Beschichtung neigen, was bei Beschichtungen auf Silikonbasis weit eher der Fall ist. Bevorzugt enthält die Beschichtung Copolymere aus Acrylat und Silikon.

Bevorzugt wird die Antireflex-Beschichtung durch eine Acrylatbeschichtung dargestellt, die zu mehr als 70 Gew.-% Methylmethacrylat und Ethylacrylat, besonders bevorzugt zu mehr als 80 Gew.-% Methylmethacrylat und Ethylacrylat und ganz besonders bevorzugt zu mehr als 93 Gew.-% aus Methylmethacrylat und Ethylacrylat Wiederholungseinheiten aufgebaut ist. Die anderen Wiederholungseinheiten stammen aus anderen üblichen mit Methylmethacrylat copolymerisierbaren Monomeren wie z.B. Butadien, Vinylacetat, etc.. Bevorzugt bestehen mehr als 50 Gew.-% der Acrylatbeschichtung aus Methylmethacrylat-Wiederholungseinheiten. Bevorzugt enthält die Acrylatbeschichtung weniger als 10 Gew.-%, besonders bevorzugt weniger als 5 Gew.-% und ganz besonders bevorzugt weniger als 1 Gew.-%

Wiederholungseinheiten, die ein aromatisches Strukturelement enthalten. Oberhalb von 10 Gew.-% Anteil an Wiederholungseinheiten mit aromatischem Strukturelement kommt es zu einer deutlichen Verschlechterung der Bewitterungsstabilität der Beschichtung. Besonders bevorzugt enthält die Antireflex-Beschichtung, mindestens 1 Gew.-% (bezogen auf das Trockengewicht) eines UV-Stabilisators, besonders bevorzugt ist dabei Tinuvin 479, oder Tinuvin 5333-DW. Weniger bevorzugt sind HALS (hindered amin light stabilizers), da diese bei der Regenerierung (Rückführung von Folienresten aus der Produktion) zu einer deutlichen Gelbfärbung des Materials und damit zur Transparenzreduktion führen. Weiterhin kann die Antireflex-Beschichtung aus einem Acrylat-Silikon-Copolymer oder einem Polyurethan (z.B. NeoRez® R-600 von DSM Coating Resins LLC.) und einem weiteren UV-Stabilisator bestehen.

Die Dicke der Antireflex-Beschichtung beträgt mindestens 60 nm bevorzugt mindestens 70 nm und besonders bevorzugt mindestens 80 nm und beträgt maximal 130 nm, bevorzugt maximal 115 nm und besonders bevorzugt maximal 110 nm. Hierdurch wird eine ideale Transparenzerhöhung im gewünschten Wellenlängenbereich erreicht. In einer bevorzugten Ausführungsform liegt die Dicke der Beschichtung bei mehr als 87 nm, und besonders bevorzugt bei mehr als 95 nm.

In dieser bevorzugten Ausführungsform liegt die Dicke der Beschichtung bevorzugt bei kleiner 115 nm und idealerweise unter 110 nm. In diesem engen Dickenbereich, ist sowohl die Transparenzerhöhung in der Nähe des Optimums und gleichzeitig ist in diesem Bereich die Reflektion des UV und Blaubereichs des Lichts gegenüber dem Rest des sichtbaren Spektrums erhöht. Dies spart einerseits UV-Stabilisator, führt aber vor allem dazu, dass sich das Blau/Rot-Verhältnis zugunsten des Rot-Anteils verschiebt. Hierdurch wird ein verbessertes Pflanzenwachstum, ein vermehrter Blüten- und Fruchtansatz erreicht und einer Vergeilung der Pflanzen entgegen gewirkt.

Wird die Antireflex-Modifikation durch eine Deckschichtmodifikation gebildet, so wird die Deckschichtmodifikation durch Co-Extrusion auf der Basisschicht B gebildet und befindet sich auf der der Antifog-Beschichtung gegenüberliegenden Folienseite. In diesem Fall bildet die Schicht, die durch die Deckschichtmodifikation gebildet wird die Schicht C. Dabei muss diese Schicht aus einem Polyester bestehen, der einen geringeren Brechungsindex als der Polyester der Basisschicht B aufweist. Der Brechungsindex bei einer Wellenlänge von 589 nm in Maschinenrichtung der durch Co-Extrusion aufgebrachten Schicht C liegt unterhalb von 1,70, bevorzugt unterhalb von 1,65 und besonders bevorzugt unterhalb von 1,60. Dieser Brechungsindex wird dadurch erreicht, dass das Polymer einen Co-Monomeranteil von mindestens 2 Mol-%, bevorzugt mindestens 3 Mol-% und besonders bevorzugt mindestens 6 Mol-% enthält. Unterhalb von 2 Mol-% können die erfindungsgemäßen Werte für den Brechungsindex nicht erreicht werden. Der Co-Monomeranteil liegt in unterhalb von 20 Mol-%, besonders bevorzugt unterhalb von 18 Mol-% und besonders bevorzugt unterhalb von 16 Mol-%. Oberhalb von 16 Mol-% wird die UV-Stabilität aufgrund der amorphen Natur der Schicht deutlich schlechter und oberhalb von 20 Mol-% kann auch mit einem Mehr an UV-Stabilisator nicht mehr das gleiche Niveau an UV-Stabilität erreicht werden, wie unterhalb von 16 Mol-%.

Als Co-Monomere gelten alle Monomere außer Ethylenglycol und Terephthalsäure (bzw. Dimethylterephthalat). Die erfindungsgemäßen Anteile an Co-Monomer beziehen sich immer auf die Summe aller Co-Monomere. Bevorzugt werden nicht mehr als 2 Co-Monomere gleichzeitig verwendet. Besonders bevorzugt als Co-Monomer ist Isophthalsäure. Bevorzugt umfasst die durch Co-Extrusion aufgebrachte Schicht C mehr als 8 Mol-% IPA und besonders bevorzugt mehr als 10 Mol-% IPA, aber weniger als 20 Mol-% IPA, bevorzugt weniger als 19 Mol-% und besonders bevorzugt weniger als 15 Mol-% (jeweils bzgl. der Dicarbonsäure-Komponente des Polyesters). Eine Schicht mit einem Co-Monomer-Gehalt größer 8 Mol-% (bezogen auf den Polyester in dieser Schicht, bzw. auf dessen Dicarbonsäure-komponente) enthält zudem bevorzugt mindestens 1,5 Gew.-% und besonders bevorzugt mehr als 2,1 Gew.-% organischen UV-Stabilisator, bezogen auf das Gesamtgewicht der Schicht, um die schlechtere UV-Stabilität von Schichten mit erhöhtem Co-Monomer-Gehalt zu kompensieren.

In einer besonders bevorzugten Ausführungsform weist eine Folienoberfläche eine Antifog-Beschichtung mit einer Dicke von mindestens 60 nm, bevorzugt mindestens 70 nm, besonders bevorzugt mindestens 80 nm auf und maximal 150 nm, bevorzugt maximal 130 nm und idealerweise maximal 120 nm. Dabei liegt der Brechungsindex der Antifog-Beschichtung bei einer Wellenlänge von 589 nm in Maschinenrichtung der Folie unterhalb von 1,64, bevorzugt unterhalb von 1,60 und idealerweise unterhalb von 1,58. Die der Antifog-Beschichtung gegenüberliegen Folienoberfläche weist eine Antireflex-Modifikation auf, die wie bereits oben beschrieben gebildet werden kann, entweder durch eine Antireflexbeschichtung oder durch eine Deckschichtmodifikation. Dadurch können die besonders bevorzugten Transparenzwerte von mindestens 94.5 % und die idealen Transparenzwerte von 95 % besonders einfach erzielt werden. Diese Folien weisen bei einer sehr hohen Transparenz sehr gute Ergebnisse im Cold-Fog und Hot-Fog-Test auf und sind somit besonders für einen mehrjährigen Einsatz im Gewächshaus geeignet.

In einer weiteren besonders bevorzugten Ausführungsform weisen beide Folienoberflächen eine Antifog-Beschichtung mit einer Dicke von mindestens 60 nm, bevorzugt mindestens 70 nm, besonders bevorzugt mindestens 80 nm und maximal 150 nm, bevorzugt maximal 130 nm und idealerweise maximal 120 nm auf. Dabei liegt der Brechungsindex der Antifog-Beschichtung bei einer Wellenlänge von 589 nm in Maschinenrichtung der Folie unterhalb von 1,64, bevorzugt unterhalb von 1,60 und idealerweise unterhalb von 1,58. Durch die beidseitige Antifog-Beschichtung können die bevorzugten Transparenzwerte von mindestens 94.5 % erzielt werden. Aufgrund der Verwendung einer einzelnen Beschichtungszusammensetzung können auf diese Weise, hochtransparente Folien mit sehr guten permanenten Antifog-Eigenschaften (Cold-Fog und Hot-Fog-Test) besonders wirtschaftlich hergestellt werden. Diese Folie ist besonders in Gewächshäusern mit einer kontinuierlich hohen Luftfeuchtigkeit (Kondensation) geeignet, da durch die beidseitige Antifog-Beschichtung die Bildung von Wassertröpfchen auf beiden Seiten der Folienoberfläche vermieden werden kann und somit zum Einen der Transparenzverlust durch Wassertröpfchenbildung minimiert und zum Anderen der Verbrennungseffekt von Pflanzen durch den Linseneffekt der Wassertropfen reduziert wird.

Um die erfindungsgemäße permanente Antibeschlag-Wirkung zu erzielen, muss die Folie mindestens einseitig mit einer permanenten Antifog-Beschichtung ausgestattet sein. Die guten Antibeschlag-Eigenschaften der Oberfläche werden erzielt, wenn die Bildung feiner Wassertröpfchen (z.B. Kondensation im Gewächshaus) auf der Oberfläche der Polyesterfolie nicht beobachtet wird und gleichzeitig die Abwaschbeständigkeit der Beschichtung gut ist. Eine Mindestvoraussetzung für gute Antibeschlag-Eigenschaften ist eine hohe Oberflächenspannung, bzw. ein niedriger Kontaktwinkel a. Die Antibeschlag-Eigenschaften sind ausreichendend gut, wenn die Oberflächenspannung der Antibeschlagoberfläche mindestens 46 mN/m, bevorzugt mindestens 48 mN/m und besonders bevorzugt mindestens 55 mN/m beträgt. Ein permanenter Antifog-Effekt kann für eine Dauer von mindestens einem Jahr im Cold-Fog-Test und für mindestens drei Monate im Hot-Fog-Test erreicht werden (gewünschte Ratings A und B). Bei einer mehrschichtigen Ausführungsform mit einer Antireflex-modifizierten Coex-Schicht wird die permanente Antifog-Beschichtung der Antireflex-modifizierten Coex-Schicht gegenüberliegende Folienseite aufgebracht. Die Antifog-Beschichtung wird durch Trocknung einer Beschichtungszusammensetzung gebildet. Die Beschichtung wird homogen mit Antragsgewichten zwischen 1,0 und 3,0 g/m2 aufgetragen (Nassantrag).

Durch die Verwendung der im Folgenden beschriebenen Beschichtungszusammensetzung werden die erfindungsgemäßen permanenten Antibeschlag-Eigenschaften und eine Transparenz von mindestens 93% erreicht. Die erfindungsgemäße Antifog-Beschichtungszusammensetzung stellt eine Dispersion dar und enthält neben Wasser (kontinuierliche Phase) folgende Komponenten (disperse Phase): a) hygroskopisches, poröses Material, b) einen Vernetzer auf Polymerbasis, c) ein haftvermittelndes organofunktionelles Silan und d) ein oder mehrere Tenside.

Zur Herstellung der Beschichtungsdispersion können die Komponenten a) - d) entweder trocken, bzw. pur (d.h. in nicht gelöstem bzw. nicht dispergiertem Zustand) vorgelegt und anschließend im wässrigen Medium dispergiert, oder jeweils einzeln im wässrigen Medium vordispergiert bzw. gelöst vorgelegt und anschließend gemischt und ggf. mit Wasser verdünnt werden. Kommen die Komponenten a) - d) jeweils einzeln dispergiert, bzw. gelöst zum Einsatz, so hat es sich als günstig erwiesen, wenn das resultierende Gemisch mindestens 10 Minuten mit einem Rührer homogenisiert wird bevor es zum Einsatz kommt. Falls die Komponenten a) - d) in Reinform (d.h. in nicht gelöstem bzw. nicht dispergiertem Zustand) zum Einsatz kommen, so hat es sich als besonders günstig erwiesen, wenn bei der Dispergierung hohe Scherkräfte durch den Einsatz entsprechender Homogenisierungsverfahren aufgebracht werden.

Der nicht-wässrige Anteil der Dispersion liegt bevorzugt im Bereich von 2 bis 20 Gew.-% und besonders bevorzugt im Bereich von 5 bis 18 Gew.-%. Im Allgemeinen können als Komponente a) anorganische und/oder organische Partikel, wie amorphe Kieselsäure, anorganisches Alkoxide, die Silizium, Aluminium oder Titan enthalten (wie beschrieben in DE 69833711), Kaolin, vernetzte Polystyrol- oder Acrylat-Partikel eingesetzt werden. Der Einsatz von anorganischen Alkoxiden, vernetzte Polystyrol- oder Acrylat-Partikeln haben sich als nachteilig erwiesen, da eine negative Beeinflussung der Antibeschlag-Eigenschaften beobachtet werden konnte. Bevorzugt wird poröses $SiO_2$, wie amorphe Kieselsäure, sowie Aluminiumsilikate (Zeolithe) eingesetzt. Des Weiteren können zusätzlich oder ausschließlich $SiO_2$-Nanopartikel eingesetzt werden, um die Benetzbarkeit der Folienoberfläche zu erhöhen, sowie genügend Wasser zu absorbieren, so dass ein homogener Wasserfilm gebildet wird und somit der Antibeschlag-Eindruck entsteht. Insbesondere geeignet ist hier Elecut AG 100, eine Aluminiumsilicat-Dispersion von Takemoto Oil and Fat Co. Ltd. (Japan). Die Komponente a) wird in einer Konzentration von 1,0 bis 6,5 Gew.-%, bevorzugt 1,5 bis 6,0 Gew.-% eingesetzt. Als Komponente b) werden 0,5 bis 6,0 Gew.-%, bevorzugt 1,0 bis 5,0 Gew.-% eines vernetzenden Polymers, ein Acrylat, hydrophiler Polyester, Polyurethan, oder ein Oxazolin funktionalisiertes Acrylatpolymer eingesetzt. In einer bevorzugten Ausführungsform wird ein Oxazolin-modifiziertes Polymer (Oxazolin basierter Vernetzer) das unter dem Handelsnamen geführte EPOCROS WS-500 und insbesondere EPOCROS WS-700 von Nippon Shokubai eingesetzt.

Als Komponente c) kann Vinyltrimethoxysilan, Vinyltriethoxysilan, γ-Meth-Acryloxypropyl-trimethoxysilan, oder γ-Glycidoxypropyltrimethoxysilan verwendet werden, welches in einer Konzentration von 0,1 bis 1,0 Gew.-%, bevorzugt von 0,2 bis 0,7 Gew.-%, eingesetzt wird. Besonders bevorzugt wird das Z-6040 Silan, ein Gylcidoxypropyltrimethoxysilan von Dow Corning für eine verbesserte Haftvermittlung eingesetzt. Das in der oben beschriebenen Beschichtungszusammensetzung genannte Tensid d) wird in einer Konzentration von 1.5 bis 7,0 Gew.-%, bevorzugt von 2,0 bis 6,5 Gew.-%, verwendet und ist entweder ein ionisches, bevorzugt ein anionisches Tensid, aus der Gruppe der Alkylsulfate, Alkylbenzolsulfate oder Sulfobernsteinsäureester. Bevorzugt sind Tenside, die aus der Gruppe der Sulfobernstseinsäureester (Natriumdioctylsulfosuccinat) ausgewählt sind, oder nichtionische Tenside, z.B. Polysorbat 80 (Polyoxyethylen(20)-sorbitan-monooleat), wie z.B. Tween 80 (Sigma Aldrich), oder Elecut AG 200 von Takemoto Oil and Fat Co. Ltd. (Japan) zum Einsatz. Durch die Zugabe eines weiteren Tensids von 0,01 bis 0,08 Gew.-%, bevorzugt 0,02 bis 0,07 Gew.-% auf Basis von Alkoholalkoxylaten, wie z.B. unter dem Handelsnamen BYK-DYNWET 800 von BYK-Chemie, oder Surfynol 440 von Air Products erhältlich, kann die Oberflächenoptik der Beschichtung bei der Verwendung eines In-Line Auftragungsprozesses verbessert werden.

Oberhalb der erfindungsgemäßen Grenzen erreicht die Dispersion eine zu hohe Viskosität, so dass die Beschichtung nicht mehr homogen mit den allgemeinen Beschichtungsverfahren aufgetragen werden kann. Außerdem sinkt die Wirtschaftlichkeit der Folie, aufgrund der Verwendung eines Überschusses an Beschichtungskomponenten. Unterhalb der erfindungsgemäßen Grenzen treten die gewünschten Antibeschlag-Eigenschaften nur begrenzt (nicht permanent) auf, da die gewünschte Beschichtungsstärke zu gering ist.

Durch die Einhaltung der erfindungsgemäßen Grenzen liefert das Reaktionsprodukt der Beschichtungsdispersion, speziell auf einer biaxial verstreckten Polyesterfolie, einen guten Antibeschlageffekt, eine hohe Abwaschresistenz und eine hohe Hydrophilie.

Gemäß einer Ausführungsform wird die Antibeschlag- und/oder Antireflex-Beschichtung In-Line beim Herstellungsprozess der biaxial orientierten Polyesterfolie aufgebracht. Dabei erfolgen der Antrag der Beschichtung (permanente Antifog-Beschichtung) bzw. der Beschichtungen (Antifog-Beschichtung und Antireflex-Beschichtung), einseitig bzw. beidseitig nach der Längs- und vor der Querstreckung. Um eine gute Benetzung der Polyesterfolie mit den wässrig basierten Beschichtungen zu erzielen, wird/werden die Folienoberfläche/n bevorzugt zunächst coronabehandelt. Die Beschichtung(en) kann/können mit einem gängigen geeigneten Verfahren wie mit einem Schlitzgießer oder einem Sprühverfahren aufgetragen werden. Besonders bevorzugt ist die Aufbringung der Beschichtung(en) mittels des "Reverse gravure-roll coating"-Verfahrens, bei dem sich die Beschichtung(en) äußerst homogen auftragen lässt/lassen. Ebenfalls bevorzugt ist die Auftragung durch das Meyer-Rod-Verfahren, mit dem sich größere Beschichtungsstärken erzielen lassen. Die Beschichtungskomponenten können während der Trocknung und Verstreckung der Polyesterfolie und besonders bei der anschließenden Wärmebehandlung, die bis zu 240°C erreichen kann, miteinander reagieren. Das In-Line-Verfahren ist hierbei wirtschaftlich attraktiver, da bei einer beidseitigen Beschichtung, die Antifog- und Antireflex-Beschichtung gleichzeitig aufgetragen werden können, so dass ein Prozessschritt im Gegensatz zum Off-Line Verfahren eingespart werden kann.

In einem weiteren bevorzugten Verfahren werden die oben beschriebenen Beschichtungen durch Off-Line-Technologie aufgetragen. Dabei wird die Antireflex- und/oder Antifog-Beschichtung gemäß der vorliegenden Erfindung mittels Off-Line-Technologie in einem zusätzlichen, der Folienherstellung nachgeordnetem Prozessschritt auf die entsprechende Oberflächen der Polyesterfolie aufgebracht, wobei eine Gravurwalze (forward gravure) verwendet wird. Die Höchstgrenzen werden durch die Verfahrensbedingungen und der Viskosität der Beschichtungsdispersion festgelegt und finden ihre Obergrenze in der Verarbeitbarkeit der Beschichtungsdispersion. Es hat sich als ungünstig erwiesen, die Antifog-Beschichtung auf eine Unterbeschichtung aufzubringen (Antifog-Beschichtung auf eine Antireflex-Beschichtung), da zum einen der Materialverbrauch steigt und zum anderen ein weiterer Prozessschritt benötigt wird, wodurch die Wirtschaftlichkeit der Folie herabgesetzt wird. Bei manchen In-Line-Beschichtungsverfahren können die besonders bevorzugten Beschichtungsdicken aufgrund der hohen Viskosität der Beschichtungsdispersion nicht erreicht werden. In diesem Fall bietet es sich an das Off-Line-Beschichtungsverfahren zu wählen, da hier Dispersionen mit niedrigeren Feststoffgehalten und höheren Nassanträgen verarbeitet werden können, wodurch sich eine einfachere Verarbeitbarkeit ergibt. Außerdem können bei Off-Line-Beschichtungen höhere Beschichtungsdicken erreicht werden, was sich bei Anwendungen die eine hohe Anforderung an die Lebenszeit der Antibeschlag-Wikung haben, als vorteilhaft erwiesen hat. So können durch das Off-Line Verfahren besonders einfach Beschichtungsdicken von größer 80 nm erzielt werden, wodurch sich ein besserer permanenter Antibeschlag-Effekt erzielen läßt, jedoch keine weitere Erhöhung der Transparenz.

### Verfahren zur Herstellung

Die Polyesterpolymere der einzelnen Schichten werden durch Polykondensation hergestellt, entweder ausgehend von Dicarbonsäuren und Diol oder auch ausgehend von den Estern der Dicarbonsäuren, vorzugweise den Dimethylestern, und Diol. Verwendbare Polyester haben bevorzugt SV-Werte im Bereich von 500 bis 1300, wobei die einzelnen Werte weniger wichtig sind, aber der mittlere SV-Wert der eingesetzten Rohstoffe größer als 700 sein muss und bevorzugt größer als 750 ist.

Die Partikel, sowie UV-Stabilisatoren können bereits bei der Herstellung des Polyesters zugegeben werden. Hierzu werden die Partikel im Diol dispergiert, gegebenenfalls gemahlen, dekantiert oder/und filtriert und dem Reaktor, entweder im (Um)-Esterungs- oder Polykondensationsschritt zugegeben. Bevorzugt kann ein konzentriertes partikelhaltiges oder additivhaltiges Polyester-Masterbatch mit einem Zweischneckenextruder hergestellt werden und bei der Folienextrusion mit partikelfreiem Polyester verdünnt werden. Es hat sich dabei als günstig erwiesen, wenn keine Masterbatche eingesetzt werden, die weniger als 30 Gew.-% Polyester enthalten. Insbesondere das $SiO_2$-Partikel enthaltende Masterbatch sollte nicht mehr als 20 Gew.-%ig an $SiO_2$ sein (Gefahr der Gelbildung). Eine weitere Möglichkeit besteht darin, Partikel und Additive direkt bei der Folienextrusion in einem Zweischneckenextruder zuzugeben.

Wenn Einschneckenextruder verwendet werden, dann hat es sich als vorteilhaft erwiesen die Polyester vorher zu trocknen. Bei Verwendung eines Zweischneckenextruders mit Entgasungszone kann auf den Trocknungsschritt verzichtet werden.

Zunächst wird der Polyester bzw. die Polyestermischung der Schicht oder bei Mehrschichtfolien der einzelnen Schichten in Extrudern komprimiert und verflüssigt. Dann wird/werden die Schmelze/Schmelzen in einer Ein- bzw. Mehrschichtdüse zu flachen Schmelzefilmen ausgeformt, durch eine Breitschlitzdüse gepresst und auf einer Kühlwalze und einer oder mehreren Abzugswalzen abgezogen, wobei sie abkühlt und sich verfestigt.

Die erfindungsgemäße Folie wird biaxial orientiert, d.h. biaxial gestreckt. Die biaxiale Verstreckung der Folie wird am häufigsten sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 bis 130 °C (Aufheiztemperaturen 80 bis 130 °C) und in Querrichtung in einem Temperaturbereich von 90 °C (Beginn der Streckung) bis 140°C (Ende der Streckung) durchgeführt. Das Längsstreckverhältnis liegt im Bereich von 2,5:1 bis 4,5:1, bevorzugt von 2,8:1 bis 3,4:1. Ein Streckverhältnis oberhalb von 4,5 führt zu einer deutlich verschlechterten Herstellbarkeit (Abrisse). Das Querstreckverhältnis liegt allgemein im Bereich von 2,5:1 bis 5,0:1, bevorzugt von 3,2:1 bis 4:1. Ein höheres Querstreckverhältnis als 4,8 führt zu einer deutlich verschlechterten Herstellbarkeit (Abrisse) und sollte daher bevorzugt vermieden werden. Zum Erreichen der gewünschten Folieneigenschaften hat es sich als vorteilhaft erwiesen, wenn die Strecktemperatur (in MD und TD) unter 125 °C und bevorzugt unter 118 °C liegt. Vor der Querstreckung können eine oder beide Oberfläche(n) der Folie nach den an sich bekannten Verfahren In-Line beschichtet werden. Die In-Line-Beschichtung kann bevorzugt zur Aufbringung einer Beschichtung zur Transparenzerhöhung (Antireflex) benutzt werden. Bei der nachfolgenden Thermofixierung wird die Folie über eine Zeitdauer von etwa 0,1 bis 10 s unter Spannung bei einer Temperatur von 150 bis 250 °C gehalten und zum Erreichen der bevorzugten Schrumpf- und Längungswerte um mindestens 1 %, bevorzugt mindestens 3 % und besonders bevorzugt mindestens 4 % in Querrichtung relaxiert. Diese Relaxation findet bevorzugt in einem Temperaturbereich von 150 bis 190 °C statt. Zur Reduktion des Transparenzbows liegt die Temperatur im ersten Fixierfeld bevorzugt unter 220°C und besonders bevorzugt unter 190 °C. Zudem sollten vorzugsweise aus dem gleichen Grund mindestens 1% bevorzugt mindestens 2% des Gesamtquerstreckverhältnisses im ersten Fixierfeld liegen, in dem üblicherweise nicht mehr gestreckt wird. Anschließend wird die Folie in üblicher Weise aufgewickelt.

Bei einer besonders wirtschaftlichen Herstellungsweise der Polyesterfolie kann das Verschnittmaterial (Regenerat) in einer Menge von bis zu 60 Gew.-%, bezogen auf das Gesamtgewicht der Folie, der Extrusion zugeführt werden, ohne dass dabei die physikalischen Eigenschaften der Folie nennenswert negativ beeinflusst werden.

### Weitere Folieneigenschaften

Die erfindungsgemäße Folie nach dem oben beschrieben Verfahren weist bevorzugt bei 150°C einen Schrumpf in Längs- und Querrichtung von unter 5 %, bevorzugt unter 2 % und besonders bevorzugt von unter 1,5 % auf. Diese Folie weist weiterhin bei 100°C eine Ausdehnung von weniger als 3 %, bevorzugt von weniger als 1 % und besonders bevorzugt von weniger als 0,3 % auf. Diese Formstabilität kann beispielsweise durch geeignete Relaxation der Folie vor dem Aufwickeln erhalten werden. Diese Formstabilität ist wichtig, um bei der Verwendung in Energiesparmatten ein Nachschrumpfen der Streifen zu vermeiden, welches zum vermehrten Durchtritt von Luft zwischen den Streifen führen würde (Reduktion der Energiesparwirkung). Sowohl bei der Herstellung von Rollos als auch bei Energiesparmatten führen sowohl ein zu hoher Schrumpf als auch eine zu hohe Ausdehnung, zur wellenartigen Verdehnungen der fertigen Produkte.

Die erfindungsgemäße Folie weist weiterhin einen E-Modul in beiden Folienrichtungen in Längs- und Querrichtung von größer 3000 N/mm$^2$ und bevorzugt von größer 3500 N/mm$^2$ und besonders bevorzugt (in mindestens einer Folienrichtung) von > 4500 N/mm$^2$ auf. Die F5-Werte (Kraft bei 5 % Dehnung) liegen bevorzugt in Längs- und Querrichtung bei über 80 N/mm$^2$ und besonders bevorzugt bei über 90 N/mm$^2$. Diese mechanischen Eigenschaften können durch Variation der Parameter der biaxialen Streckung der Folie im Rahmen der oben angegebenen Verfahrensbedingungen eingestellt und erhalten werden. Folien mit den genannten mechanischen Eigenschaften werden in der Anwendung unter Zug nicht übermäßig verdehnt und bleiben gut führbar.

Zum Erreichen der erfindungsgemäßen Transparenzwerte hat es sich zudem als günstig erwiesen, wenn die Trübung der Folie kleiner ist als 20 %, bevorzugt, kleiner ist als 18 % und idealerweise kleiner ist als 15 %. Je geringer die Trübung ist, desto geringer auch die Rückstreuung von Licht und damit der Transparenzverlust. Bei Einhaltung der erfindungsgemäßen Partikelgehalte und Polymerzusammensetzung werden diese Trübungswerte erreicht.

*Anwendung*

Die erfindungsgemäßen Folien eignen sich hervorragend als hochtransparente Konvektionssperre, insbesondere zur Herstellung von Energiesparmatten in Gewächshäusern. Hierbei wird die Folie üblicherweise in schmale Streifen geschnitten, aus denen anschließend zusammen mit Polyestergarn (auch dieses muss UV-stabilisiert sein) ein Gewebe/Gelege hergestellt wird, welches im Gewächshaus aufgehängt wird. Die Streifen aus erfindungsgemäßer Folie können dabei mit Streifen aus anderen Folien kombiniert werden (insbesondere mit Folien mit einer Lichtstreuwirkung oder weiteren Transparenzerhöhung).

Alternativ kann auch die Folie selbst (Vollfläche, kein Gewebe) im Gewächshaus installiert werden.

**Analytik**

Zur Charakterisierung der Rohstoffe und der Folien wurden die folgenden Messmethoden benutzt:

**UV/Vis Spektren bzw. Transmission bei Wellenlänge x**

Die Folien wurden in Transmission in einem UV/Vis Zweistrahlspektrometer (Lambda 12 oder 35) der Firma Perkin Elmer USA gemessen. Eine etwa (3 x 5) cm große Folienprobe wird dazu über eine Flachprobenhaltevorrichtung senkrecht zum Messstrahl in den Strahlengang eingelegt. Der Messstrahl führt über eine 50 mm-Ulbrichtkugel hin zum Detektor, wo die Intensität zur Bestimmung der Transparenz bei gewünschter Wellenlänge bestimmt wird.

Als Hintergrund dient Luft. Die Transmission wird bei der gewünschten Wellenlänge abgelesen.

**Trübung / Transparenz**

Die Prüfung dient zur Bestimmung der Trübung und Transparenz von KunststoffFolien, bei denen die optische Klarheit bzw. Trübung für den Gebrauchswert wesentlich ist. Die Messung erfolgt an dem Hazegard Hazemeter XL-21 1 der Fa. BYK Gardner nach ASTM D 1003-61.Die Transparenz wurde nach ASTM-D 1003-61 (Methode A) gemessen mittels haze-gard plus der Firma BYK-Gardner GmbH Deutschland.

**SV-Wert (standard viscosity)**

Die Standardviskosität in verdünnter Lösung SV wurde, angelehnt an DIN 53 728 Teil 3, in einem Ubbelohde Viskosimeter bei (25 ± 0,05)°C gemessen. Dichloressigsäure (DCE) wurde als Lösemittel verwendet. Die Konzentration des gelösten Polymers betrug 1 g Polymer / 100 ml reines Lösemittels. Die Auflösung des Polymers erfolgte 1 Stunde bei 60°C. Wurden die Proben nach dieser Zeit nicht vollständig gelöst, wurden noch bis zwei Auflösungsversuche jeweils 40 Min bei 80°C durchgeführt und die Lösungen anschließend 1 Stunde bei einer Drehzahl von 4100 min$^{-1}$ zentrifugiert.

Aus der relativen Viskosität ($\eta_{rel} = \eta/\eta_s$) wird der dimensionslose SV-Wert wie folgt ermittelt:

$$SV = (\eta_{rel}\text{-}1) \times 1000$$

Der Anteil an Partikeln in der Folie bzw. Polymerrohstoff wurde mittels Aschebestimmung ermittelt und durch entsprechende Mehreinwaage korrigiert. D.h.:

$$\text{Einwaage} = (\text{Einwaage entsprechend 100\% Polymer}) / [ (100\text{-Partikelgehalt in Gew.-\%})/100 ]$$

**Mechanische Eigenschaften**

Die mechanischen Eigenschaften wurden über Zugprüfung angelehnt an DIN EN ISO 572-1 und -3 (Probekörper Typ 2) an 100 mm x 15 mm großen Folienstreifen bestimmt.

**Schrumpf**

Der thermische Schrumpf wurde an quadratischen Folienmustern mit einer Kantenlänge von 10 cm bestimmt. Die Proben wurden so ausgeschnitten, dass eine Kante parallel zur Maschinenrichtung und eine Kante senkrecht zur Maschinenrichtung verlief. Die Proben wurden genau ausgemessen (die Kantenlänge $L_0$ wurde für jede Maschinenrichtung TD und MD bestimmt, $L_{0\,TD}$ und $L_{0\,MD}$) und 15 min bei der angegeben Schrumpfungstemperatur (hier 150 °C) in einem Umlufttrockenschrank getempert. Die Proben wurden entnommen und bei Raumtemperatur genau ausgemessen (Kantenlänge $L_{TD}$ und $L_{MD}$). Der Schrumpf ergibt sich aus der Gleichung:

$$\text{Schrumpf [\%] MD} = 100 \bullet (L_{0\,MD} - L_{MD}) / L_{0\,MD}, \text{ bzw.}$$

$$\text{Schrumpf [\%] TD} = 100 \bullet (L_{0\,TD} - L_{TD}) / L_{0\,TD}$$

**Ausdehnung**

Die thermische Ausdehnung wurde an quadratischen Folienmustern mit einer Kantenlänge von 10 cm bestimmt. Die Proben wurden genau ausgemessen (Kantenlänge $L_0$), 15 Minuten bei 100 °C in einem Umlufttrockenschrank getempert, und anschließend bei Raumtemperatur genau ausgemessen (Kantenlänge L). Die Ausdehnung ergibt sich aus der Gleichung:

$$\text{Ausdehnung [\%]} = 100 * (L - L_0) / L_0$$

und wurde in jeder Folienrichtung separat ermittelt.

**UV-Stabilität**

Die UV-Stabilität wurde wie in DE69731750 (DE von WO9806575) auf Seite 8 beschrieben bestimmt und der UTS Wert in % vom Ausgangswert angegeben, wobei die Bewitterungsdauer nicht 1000 sondern 2000 h betrug.

**Flammfestigkeit**

Ein 30 * 30 cm großes Folienstück wurde mit 2 Klammern an den Ecken gefasst und senkrecht aufgehängt. Im Allgemeinen ist darauf zu achten, dass am Ort der Aufhängung keine Luftbewegung herrscht, die das Folienstück merklich bewegt. Eine leichte Abluft von oben ist dabei akzeptabel. Das Folienstück wurde anschließend in der Mitte der unteren Seite mit einer Flamme von unten beflammt. Zur Beflammung kann ein handelsübliches Feuerzeug, oder besser ein Bunsenbrenner genutzt werden. Die Flamme muss dabei länger als 1 cm und kürzer als 3 cm sein. Die Flamme wurde solange an die Folie gehalten, bis diese ohne Zündflamme weiterbrennte (mindestens 3 Sekunden). Die Flamme wurde dabei aber maximal für 5 Sekunden an die Folie gehalten und der abbrennenden / wegschrumpfenden Folie nachgeführt. Es wurden 4 Zündvorgänge durchgeführt.

In den hier angeführten Beispielen wird die Flammfestigkeit mit folgenden Noten bewertet:

1 = die Folie hatte sich bei 4 Zündvorgängen keinmal länger als 3 Sekunden entzündet.

2 = die Folie hatte sich entzündet und ist nach weniger als 15 Sekunden selbst verloschen und es war noch mehr als 30 % der Folienfläche vorhanden.

3 = die Folie hatte sich entzündet und ist nach weniger als 20 Sekunden selbst verloschen und es war noch mehr als 30 % der Folienfläche vorhanden.

4 = die Folie hatte sich entzündet und ist nach weniger als 40 Sekunden selbst verloschen und es war noch mehr als 30 % der Folienfläche vorhanden.

5 = die Folie hatte sich entzündet und ist nach weniger als 40 Sekunden selbst verloschen und es war noch mehr als 10 % der Folienfläche vorhanden.

6 = die Folie hatte sich entzündet und hat mehr als 40 Sekunden gebrannt, oder es war nach dem selbst Verlöschen weniger als 10 % der Folienfläche vorhanden.

**Bestimmung des Brechungsindex in Abhängigkeit der Wellenlänge**

Um den Brechungsindex eines Foliensubstrats und einer aufgebrachten Beschichtung in Abhängigkeit der Wellenlänge zu bestimmen, bedient man sich der spektroskopischen Ellipsometrie.

J. A. Woollam et al, Overview of variable-angle spectroscopic ellipsometry (VASE): I. Basic theory and typical applications, Proc. SPIE Vol. CR72, p. 3-28, Optical Metrology, Ghanim A. Al-Jumaily; Ed.

Dazu analysiert man zunächst die Basisfolie ohne Beschichtung oder modifizierte Coexseite. Zur Unterdrückung der Rückseitenreflexion raut man die Folienrückseite mit einem Schleifpapier mit möglichst feiner Körnung (beispielsweise P1000) an. Die Folie wird anschließend mit einem spektroskopischen Ellipsometer vermessen, hier ein M-2000 der Firma J. A. Woollam Co., Inc., das mit einem rotierenden Kompensator ausgestattet ist. Die Maschinenrichtung der Probe liegt parallel zum Lichtstrahl. Die vermessene Wellenlänge liegt im Bereich von 370 bis 1000 nm, die Messwinkel betragen 65, 70 und 75 °.

Die ellipsometrischen Daten $\Psi$ und $\Delta$ werden anschließend mit einem Modell nachempfunden. Dazu eignet sich im vorliegenden Fall das Cauchy-Modell $n(\lambda) = A + \dfrac{B}{\lambda^2} + \dfrac{C}{\lambda^4}$ (Wellenlänge A in $\mu$m). Die Parameter A, B und C werden so variiert, dass die Daten möglichst gut mit dem gemessenen Spektrum $\Psi$ und $\Delta$ übereinstimmen. Zur Prüfung der Güte des Modells kann der MSE-Wert einbezogen werden, der möglichst klein sein soll und Modell mit gemessenen Daten ($\Psi(\lambda)$ und $\Delta(\lambda)$) vergleicht.

$$\text{MSE} = \sqrt{\frac{1}{3n-m} \sum_{i=1}^{n} \left[ \left(N_{E,i} - N_{G,i}\right)^2 + \left(C_{E,i} - C_{G,i}\right)^2 + \left(S_{E,i} - S_{G,i}\right)^2 \right]} \cdot 1000$$

n = Anzahl Wellenlängen, m = Anzahl Fit Parameter, N = cos(2$\Psi$), C = sin(2$\Psi$) cos($\Delta$), S = sin(2$\Psi$) sin($\Delta$) [1]

Die erhaltenen Cauchy-Parameter A, B und C für die Basisfolie erlauben die Berechnung des Brechungsindex n in Abhängigkeit der Wellenlänge, gültig im vermessenen Bereich 370 bis 1000 nm.

Die Beschichtung oder eine modifizierte coextrudierte Schicht kann analog analysiert werden. Die Parameter der Folienbasis sind nun schon bekannt und sollten bei der Modellierung konstant gehalten werden. Auch zur Bestimmung der Beschichtung der der coextrudierte Schicht muss die Folienrückseite, wie oben beschrieben, angeraut werden. Hier kann man ebenfalls das Cauchy-Modell verwenden, um den Brechungsindex in Abhängigkeit der Wellenlänge zu beschreiben. Die jeweilige Schicht befindet sich jetzt jedoch auf dem bereits bekannten Substrat, was in der jeweiligen Auswertesoftware berücksichtigt wird (CompleteEASE oder WVase). Die Dicke der Schicht beeinflusst das erhaltene Spektrum und muss bei der Modellierung berücksichtigt werden.

**Oberflächenspannung**

Die Oberflächenspannung (Surface free energy) wurde aus den Kontaktwinkeln mittels der Owens-Wendt-Rabel-Kaelble-Methode nach DIN 5560-1,2 berechnet. Als Testflüssigkeiten dienen Wasser, 1,5-Pentandiol und Dijodmethan. Die Bestimmung der Kontaktwinkel erfolgte mittels eines DSA-100-Messgerätes der Firma Krüss GmbH, Deutschland. Die Auswertung nach Owens-Wendt-Rabel-Kaelble erfolgte mittels der zum Gerät gehörenden DSA-Software (Stand 2005). Für 1,5-Pentandiole wurden Werte für den polaren und dispersen Anteil nach Gebhardt übernommen, für Wasser und Dijodmethan Werte nach Ström.

|  | IFT in mN/m | dispers in mN/m | polar in mN/m |
|---|---|---|---|
| Wasser | 72,8 | 21,8 | 51 |
| 1,5-Pentandiol | 43,3 | 27,6 | 15,7 |
| Dijodmethan | 50,8 | 50,8 | 0 |

**Messung des Kontaktwinkels $\alpha$ (vgl. Figur 1)**

Als Maß für die Hydrophilie der Folienoberfläche (A) wird eine statische Kontaktwinkelmessung von destilliertem Wasser nach DIN 55660-1,2 benutzt. Zur Messung an statischen Tropfen (B) wird das Messgerät DSA-100 der Firma Krüss GmbH mit der Software Ver. 4 eingesetzt. Die Bestimmung findet bei 23 °C und 50 % r. F. auf entladenen und in Standardklima mindestens 16 Stunden vorher konditionierten Folienproben statt. Mittels einer automatisierten Dosierspritze Typ ME41 werden 3-5 $\mu$l von destilliertem Wasser auf die Folienoberfläche aufgebracht. Über eine Zeit von 20 Sekunden wird alle 5 Sekunden der Kontaktwinkel $\alpha$ automatisch bestimmt. Die Messung erfolgt an 4 Tropfen und aus den 16 Einzelwerten wird der Mittelwert des Kontaktwinkels $\alpha$ gebildet.

**Bestimmung der Antibeschlag-Wirkung**

Cold-Fog-Test: Die Antibeschlag-Eigenschaften der Polyesterfolien werden wie folgt bestimmt: In einem auf 23 °C und 50 % relative Luftfeuchtigkeit temperierten Labor wurden Folienmuster auf eine Menüschale (Länge ca. 17 cm, Breite ca. 12 cm, Höhe ca. 3 cm) aus amorphem Polyethylenterephthalat (=APET), die ca. 50 ml Wasser enthielt, gesiegelt. Die Schalen werden in einem auf 4 °C temperierten Kühlschrank gelagert und in einem Winkel von 30° aufgestellt und nach jeweils 12h, 24h, 1 Woche, 1 Monat, 1 Jahr zur Beurteilung entnommen. Die Kondensatbildung beim Abkühlen der 23 °C warmen Luft auf Kühlschranktemperatur wird geprüft. Eine mit einem wirksamen Antibeschlag-Mittel ausgerüstete Folie ist auch nach der Kondensatbildung transparent, da das Kondensat einen zusammenhängenden, transparenten Film bildet. Ohne wirksames Antibeschlag-Mittel führt die Bildung eines feinen Tröpfchennebels auf der Folienoberfläche zu einer verminderten Transparenz der Folie; im ungünstigsten Fall ist der Inhalt der Menüschale nicht mehr sichtbar.

Eine weitere Untersuchungsmethode ist der so genannte Heiß-Dampf- oder Hot-Fog-Test. Hierzu wird ein QCT Kondensations-Tester von Q-Lab verwendet. Dieser simuliert die Beschlag-Effekte von klimatischen Feuchtigkeitseinflüssen, indem warmes Wasser direkt auf der Folie kondensiert wird. In wenigen Tagen bzw. Wochen können somit Ergebnisse reproduziert werden, die durch Feuchtigkeit innerhalb von Monaten oder Jahren verursacht werden. Dazu wird das Wasser im QCT-Kondensationsgerät auf 60 °C temperiert und die Folie in der entsprechenden Halterung eingespannt. Dabei hat die bespannte Folie einen Neigungswinkel von ca. 30°. Die Beurteilung ist die Gleiche wie zuvor oben beschrieben. Mit diesem Test kann die Langzeit-Antibeschlag-Wirkung bzw. die Abwaschbeständigkeit der Folie geprüft werden, da der Dampf ständig an der Folie kondensiert und wieder abläuft und/oder abtropft. Leichtlösliche Substanzen werden so abgewaschen und die Antibeschlag-Wirkung lässt nach. Diese Untersuchung wird ebenfalls in einem auf 23 °C und 50% relative Luftfeuchtigkeit temperierten Labor durchgeführt.

Die Beurteilung der Antibeschlag-Wirkung (Antifog-Test) erfolgt visuell.

Rating:

A Eine transparente Folie, die kein sichtbares Wasser zeigt, vollständig transparent ist, exzellent

B Einige zufällig, unregelmäßig verteilte Wassertropfen auf der Oberfläche, diskontinuierlicher Wasserfilm, akzeptabel

C Eine vollständige Schicht von großtransparenten Wassertropfen, schlechte Durchsicht, Linsenbildung, Tropfenbildung, schlecht

D Eine opake oder transparente Schicht von großen Wassertropfen, keine Durchsicht, schlechte Lichtdurchlässigkeit, sehr schlecht

**Beispiele**

Die nachfolgenden Ausführungsbeispiele dienen zur weiteren Erläuterung der Erfindung, ohne diese hierauf zu beschränken. Vielmehr sind alle genannten Merkmale in jeder für den Fachmann als geeignet erscheinenden Form frei kombinierbar, und alle diese Formen werden von der vorliegenden Erfindung umfasst.

Im Folgenden wird die Erfindung anhand von Beispielen näher erläutert.

- Beispiele 1-9 und
- Vergleichsbeispiele VB1-7

Die Polymermischungen wurden bei 292°C aufgeschmolzen und durch eine Breitschlitzdüse auf eine auf 50° C temperierte Kühlwalze elektrostatisch angelegt. Die nachstehenden Rohstoffe wurden in je einem Extruder pro Schicht aufgeschmolzen und durch eine dreischichtige Breitschlitzdüse auf eine gekühlte Abzugswalze extrudiert. Die so erhaltene amorphe Vorfolie wurde dann zunächst längsgestreckt. Die längsgestreckte Folie wurde in einem Corona-Entladegerät coronabehandelt und danach durch Reversgravur-Beschichtung mit der nachstehenden Dispersion beschichtet. Danach wurde die Folie quergestreckt, fixiert und aufgerollt. Die Bedingungen in den einzelnen Verfahrensschritten waren:

| Längsstreckung | Aufheiztemperatur | 75-115 | °C |
|---|---|---|---|
| | Strecktemperatur | 115 | °C |
| | Längsstreckverhältnis | 3,8 | |
| Querstreckung | Aufheiztemperatur | 100 | °C |
| | Strecktemperatur | 112 | °C |
| | Querstreckverhältnis (inklusive Streckung 1. Fixierfeld) | 3,9 | |
| Fixierung | Temperatur | 237 - 150 | °C |
| | Dauer | 3 | s |
| | Relaxation in TD bei 200 - 150 °C | 5 | % |
| Fixierung | Temperatur 1. Fixierfeld | 170 | °C |

Zur Herstellung der nachfolgend beschriebenen Folien wurden folgende Ausgangsmaterialien verwendet: PET1 = Polyethylenterephthalatrohstoff aus Ethylenglykol und Terephthalsäure mit einem SV Wert von 820 und DEG-Gehalt von 0,9 Gew.-% (Diethylenglykolgehalt als Monomer).

PET2 = Polyethylenterephthalatrohstoff mit einem SV-Wert von 700, der 20 Gew.-% Tinuvin 1577 enthält. Der UV-Stabilisator hat folgende Zusammensetzung 2-(4,6-Diphenyl-1,3,5-triaziin-2-yl)-5-(hexyl)oxy-phenol (®Tinuvin 1577 der Firma BASF, Ludwigshafen, Deutschland). Tinuvin 1577 hat einen Schmelzpunkt von 149 °C und ist bei 330 °C thermisch stabil.

PET3 = Polyethylenterephthalatrohstoff mit einem SV-Wert von 700 und 15 Gew.-% Siliziumdioxidpartikel Sylysia310 P mit einem d50 von 2,7 $\mu$m (Hersteller FUJI SILYSIA CHEMICAL LTD. Greenville NC/USA) . Das $SiO_2$ wurde in einem Zweischneckenextruder in das Polyethylenterephthalat eingearbeitet

PET4 = Polyethylenterephthalatrohstoff mit einem SV-Wert von 710, der 25 Mol-% Isophthalsäure als Comonomer enthält.

**Zusammensetzung der Beschichtungsdispersion**

*Beschichtung 1:*

Folgende Zusammensetzung der Beschichtungslösung wurde verwendet

- 88,95 Gew.-% entionisiertes Wasser
- 3,50 Gew.-% Elecut AG 100 (16,5 Gew.-%, Takemoto Oil and Fat Co. Ltd.)
- 4,50 Gew.-% Elecut AG 200 (13,5 Gew.-%, Takemoto Oil and Fat Co. Ltd.)
- 2,50 Gew.-% EPOCROS WS-700 (25 Gew.-%, Nippon Shokubai)
- 0,50 Gew.-% Z-6040 (90-100 Gew.-%, Dow Corning)
- 0,05 Gew.-% BYK-DYNWET 800 (100 Gew.-%, BYK-Chemie GmbH)

Die einzelnen Komponenten wurden langsam unter Rühren in entionisiertes Wasser gegeben und vor Verwendung für mindestens 30 min gerührt.

*Beschichtung 2:*

Folgende Zusammensetzung der Beschichtungslösung wurde verwendet:

- 88,45 Gew.-% entionisiertes Wasser
- 2,50 Gew.-% Elecut AG 100 (16,5 Gew.-%, Takemoto Oil and Fat Co. Ltd.)
- 3,50 Gew.-% Elecut AG 200 (13,5 Gew.-%, Takemoto Oil and Fat Co. Ltd.)
- 5,00 Gew.-% EPOCROS WS-700 (25 Gew.-%, Nippon Shokubai)
- 0,50 Gew.-% Z-6040 (90-100 Gew.-%, Dow Corning)
- 0,05 Gew.-% BYK-DYNWET 800 (100 Gew.-%, BYK-Chemie GmbH)

Die einzelnen Komponenten wurden langsam unter Rühren in entionisiertes Wasser gegeben und vor Verwendung für mindestens 30 min gerührt.

Wenn nicht anders beschrieben sind die Beschichtungen im In-Line Prozess aufgetragen. Die nachfolgende Tabelle 1 fasst die Rezepturen, Herstellbedingungen und resultierenden Folieneigenschaften zusammen:

**Tabelle 1:** Eigenschaften der Folien der Beispiele

| Schicht | | Beispiel 1 | Beispiel 2 | Beispiel 3 | Beispiel 4 | Beispiel 5 | Beispiel 6 | Beispiel 7 | Beispiel 8 | Beispiel 9 |
|---|---|---|---|---|---|---|---|---|---|---|
| Foliendicke | | 15 | 15 | 15 | 15 | 15 | 15 | 15 | 15 | 15 |
| | Dicke A | 0,8 | 0,8 | 0,8 | 0,8 | 0,8 | 0,8 | 0,8 | 0,8 | 0,8 |
| | Dicke B | 13,4 | 13,4 | 13,4 | 13,4 | 13,4 | 13,4 | 13,4 | 13,4 | 13,4 |
| | Dicke C | 0,8 | 0,8 | 0,8 | 0,8 | 0,8 | 0,8 | 0,8 | 0,8 | 0,8 |
| Beschichtung auf Seite A | | Trockendicke 65 nm. Antifog-Beschichtung 1 | Trockendicke 65 nm. Antifog-Beschichtung 2 | Trockendicke 65 nm. Antifog-Beschichtung 2 | Trockendicke 65 nm. Antifog-Beschichtung 1 | Trockendicke 130 nm. Antifog-Beschichtung 1 (Off-Line Prozess) | Trockendicke 130 nm. Antifog-Beschichtung 1 (Off-Line Prozess) | Trockendicke 65 nm. Antifog-Beschichtung 1 | Trockendicke 40 nm. Antifog-Beschichtung 1 | Trockendicke 40 nm. Antifog-Beschichtung 1 |
| Beschichtung auf Seite C | | | | Trockendicke 75 nm. Acrylat-Beschichtung und Antragsmethode wie in Beispiel 1 aus EP 0144948 | Trockendicke 75 nm. Acrylat-Beschichtung und Antragsmethode wie in Beispiel 1 aus EP 0144948 | Trockendicke 150 nm. Acrylat-Beschichtung und Antragsmethode wie in Beispiel 1 aus EP 0144948 (Off-Line Prozess) | Trockendicke 150 nm. Acrylat-Beschichtung und Antragsmethode wie in Beispiel 1 aus EP 0144948 (Off-Line Prozess) | Trockendicke 65 nm. Antifog-Beschichtung 1 | Trockendicke 65 nm. Antifog-Beschichtung 1 | Trockendicke 75 nm. Acrylat-Beschichtung und Antragsmethode wie in Beispiel 1 aus EP 0144948 |
| A-Schicht | PET 1 | 89 | 89 | 89 | 89 | 89 | 89 | 89 | 89 | 89 |
| | PET 2 | 10 | 10 | 10 | 10 | 10 | 10 | 10 | 10 | 10 |
| | PET 3 | 1 | 1 | 1 | 1 | 1 | 1 | 1 | 1 | 1 |
| | PET 4 | | | | | | | | | |
| B-Schicht | PET 1 | 95 | 95 | 95 | 95 | 95 | 95 | 95 | 95 | 94,2 |
| | PET 2 | 5 | 5 | 5 | 5 | 5 | 5 | 5 | 5 | 5 |
| C-Schicht | PET 1 | 34 | 34 | 89 | 89 | 34 | 89 | 89 | 34 | 89 |
| | PET 2 | 15 | 15 | 10 | 10 | 15 | 10 | 10 | 15 | 10 |
| | PET 3 | 1 | 1 | 1 | 1 | 1 | 1 | 1 | 1 | 1 |
| | PET 4 | 50 | 50 | | | 50 | | | 50 | |
| Transparenz (Bahnmitte) | in % | 93,2 | 93,8 | 93,0 | 95,0 | 94,0 | 95,5 | 95,3 | 93,1 | 94,5 |

| | | Beispiel 1 | Beispiel 2 | Beispiel 3 | Beispiel 4 | Beispiel 5 | Beispiel 6 | Beispiel 7 | Beispiel 8 | Beispiel 9 |
|---|---|---|---|---|---|---|---|---|---|---|
| Trübung | | 10,5 | 9,8 | 13,0 | 13,0 | 15,5 | 17,8 | 17,8 | 10,5 | 9,8 |
| UV-Stabilität UTS | in % | 70 | 64 | 65 | 65 | 64 | 63 | 63 | 70 | 64 |
| Flammtest | Noten | 4 | 4 | 4 | 4 | 4 | 4 | 4 | 4 | 4 |
| E-Modul MD | N/mm2 | 4360 | 3950 | 3950 | 3950 | 4000 | 4100 | 4100 | 4360 | 3950 |
| E-Modul TD | N/mm2 | 4800 | 4350 | 4300 | 4300 | 4500 | 4550 | 4550 | 4800 | 4350 |
| F5 MD | N/mm2 | 110 | 115 | 104 | 104 | 105 | 1015 | 1015 | 110 | 115 |
| F5 TD | N/mm2 | 110 | 100 | 117 | 117 | 115 | 102 | 102 | 110 | 100 |
| Schrumpf MD | in % | 1,5 | 1,3 | 1,3 | 1,3 | 1,5 | 1,4 | 1,4 | 1,5 | 1,3 |
| Schrumpf TD | in % | 0,1 | 0,4 | 0,4 | 0,4 | 0,3 | 0,2 | 0,2 | 0,1 | 0,4 |
| Ausdehnung MD bei 100 °C | in % | 0,1 | 0 | 0 | 0 | -0,2 | 0 | 0 | 0,1 | 0 |
| Ausdehnung TD bei 100 °C | in % | 0 | 0 | 0 | 0 | 0 | 0,1 | 0,1 | 0 | 0 |
| SV-Folie | | 738 | 728 | 738 | 738 | 740 | 735 | 735 | 738 | 728 |
| Oberflächenspannung σ(gesamt) (Seite A) | [mN/m] | 58,4 | 50,5 | 55,6 | 55,6 | 56,4 | 56,5 | 56,5 | 58,4 | 50,5 |
| Cold-Fog Test | | A | A | A | A | A | A | A* | B | B |
| Hot-Fog Test | | A | B | B | A | A | A | A* | B | B |
| Bemerkung | | | | | | | | *Ergebnisse gelten für beide Folienseiten | | |

18

**Vergleichsbeispiele**

*Beschichtung 3*

Beschichtung wie in EP 1777251 A1, bestehend aus einer hydrophilen Beschichtung, bei der das Trocknungsprodukt der Beschichtungszusammensetzung Wasser, einen Sulfopolyester, ein Tensid und optional ein haftvermittelndes Polymer enthält. Diese Folien weisen eine hydrophile Oberfläche auf, die das kurzfristige Beschlagen der Folien mit Wassertröpfchen verhindert. Folgende Zusammensetzung der Beschichtungslösung wurde verwendet:

- 1,0 Gew.-% Sulfopolyester (Copolyester aus 90 Mol-% Isophthalsäure und 10 Mol-% Natriumsulfoisophthalsäure und Ethyleneglykol)
- 1,0 Gew.-% Acrylat-Copolymer bestehend aus 60 Gew.-% Methylmethacrylat, 35 Gew.-% Ethylacrylat und 5 Gew.-% N-Methylolacrylamid
- 1,5 Gew.-% Diethylhexylsulfosuccinat Natriumsalz (Lutensit A-BO BASF AG).

Tabelle 2: Eigenschaften der Folien der Vergleichsbeispiele:

| | | VB1 | VB2 | VB3 | VB4 | VB 5 | VB 6 | VB 7 | |
|---|---|---|---|---|---|---|---|---|---|
| Schicht | Foliendicke | 15 | 15 | 15 | 15 | 15 | 15 | 15 | |
| | Dicke A | 0,8 | 0,8 | 0,8 | 0,8 | 0,8 | 0,8 | 0,8 | |
| | Dicke B | 13,4 | 13,4 | 13,4 | 13,4 | 13,4 | 13,4 | 13,4 | |
| | Dicke C | 0,8 | 0,8 | 0,8 | 0,8 | 0,8 | 0,8 | 0,8 | |
| Beschichtung auf Seite A | | Trockendicke 40 nm. Antifog-*Beschichtung 3* *(In-Line)* | Trockendicke 40 nm. Antifog-*Beschichtung 3* *(In-Line)* | Trockendicke 40 nm. Antifog-*Beschichtung 3* *(Off-Line)* | Trockendicke 40 nm. Antifog-*Beschichtung 3* *(Off-Line)* | Trockendicke 25 nm. Antifog-*Beschichtung 1* | Trockendicke 40 nm. Antifog-*Beschichtung 1* | Trockendicke 25 nm. Antifog-*Beschichtung 1* | |
| Beschichtung auf Seite C | | | | | Trockendicke 75 nm. Acrylat-Beschichtung und Antrags-methode wie in *Beispiel 1* aus EP0144948 | | | Trockendicke 75 nm. Acrylat-Beschichtung und Antrags-methode wie in *Beispiel 1* aus EP0144948 | |
| A-Schicht | PET 1 | 89 | 89 | 89 | 89 | 89 | 89 | 89 | |
| | PET 2 | 10 | 10 | 10 | 10 | 10 | 10 | 10 | |
| | PET 3 | 1 | 1 | 1 | 1 | 1 | 1 | 1 | |
| | PET 4 | | | | | | | | |
| B-Schicht | PET 1 | 95 | 95 | 95 | 95 | 95 | 95 | 95 | |
| | PET 2 | 5 | 5 | 5 | 5 | 5 | 5 | 5 | |
| C-Schicht | PET 1 | 34 | 89 | 89 | 89 | 34 | 89 | 89 | |
| | PET 2 | 15 | 10 | 10 | 10 | 15 | 10 | 10 | |
| | PET 3 | 1 | 1 | 1 | 1 | 1 | 1 | 1 | |
| | PET 4 | 50 | | | | 50 | | | |
| Transparenz (Bahnmitte) | in % | 92,3 | 91,6 | 91,8 | 94,4 | 92,5 | 91,8 | 94,3 | |
| Trübung | | 10,2 | 10,9 | 11,3 | 11,0 | 11,8 | 11,8 | 11,8 | |

|  |  | VB1 | VB2 | VB3 | VB4 | VB 5 | VB 6 | VB 7 |  |
|---|---|---|---|---|---|---|---|---|---|
| UV-Stabilität UTS | in % | 65 | 70 | 64 | 65 | 65 | 65 | 65 |  |
| Flammtest | Noten | 4 | 4 | 4 | 4 | 4 | 4 | 4 |  |
| E-Modul MD | N/mm2 | 4250 | 4300 | 3900 | 4000 | 4200 | 4200 | 4200 |  |
| E-Modul TD | N/mm2 | 4820 | 4750 | 4400 | 4350 | 4750 | 4750 | 4750 |  |
| F5 MD | N/mm2 | 100 | 115 | 110 | 118 | 103 | 103 | 103 |  |
| F5 TD | N/mm2 | 112 | 105 | 113 | 117 | 112 | 112 | 112 |  |
| Schrumpf MD | in % | 1,4 | 1,7 | 1,5 | 1,3 | 1,4 | 1,4 | 1,4 |  |
| Schrumpf TD | in % | 0,4 | 0,1 | 0,4 | -0,1 | 0,3 | 0,3 | 0,3 |  |
| Ausdehnung MD bei 100 °C | in % | 0 | 0,1 | 0 | 0 | 0 | 0 | 0 |  |
| Ausdehnung TD bei 100 °C | in % | 0,1 | 0 | 0 | 0 | 0,1 | 0,1 | 0,1 |  |
| SV-Folie |  | 720 | 738 | 728 | 738 | 720 | 720 | 720 |  |
| Oberflächen-spannung σ(gesamt) (Seite A) | [mN/m] | 46,7 | 49,8 | 51,5 | 50,2 | 45,4 | 58,2 | 45,4 |  |
| Cold-Fog Test |  | C | C | C | C | B | B | B |  |
| Hot-Fog Test |  | D | D | D | D | C | B | C |  |
| Bemerkung |  |  |  |  |  |  |  |  |  |

**Patentansprüche**

1. Beschichtete Polyesterfolie mit einer Transparenz von mindestens 93%, gemessen nach ASTM-D 1003-61 (Methode A), umfassend:

   mindestens eine Basisschicht B, die einen thermoplastischen Polyester und einen UV-Stabilisator umfasst; wobei die Polyesterfolie eine erste und eine zweite Oberfläche aufweist, wobei auf mindestens einer der Oberflächen der Polyesterfolie eine permanente Antifog-Beschichtung aufgebracht ist, und wobei die Antifog-Beschichtung einen niedrigeren Brechungsindex aufweist als die Basisschicht B und wobei die Antifog-Beschichtung das Reaktionsprodukt einer Dispersion einer Antifog-Beschichtungszusammensetzung ist, die neben Wasser, a) hygroskopisches, poröses Material, b) einen Vernetzer auf Polymerbasis, c) ein haftvermittelndes organofunktionelles Silan und d) ein oder mehrere Tenside enthält.

2. Polyesterfolie nach Anspruch 1, **dadurch gekennzeichnet, dass** die Polyesterfolie eine mehrschichtige Folie ist und eine Schicht A umfasst, die auf der Basisschicht aufgebracht ist, oder eine Schicht A und eine Schicht C umfasst, wobei die Basisschicht B zwischen der Schicht A und der Schicht C angeordnet ist, und wobei die Schichten A und C ein thermoplastisches Polymer und einen UV-Stabilisator umfassen.

3. Polyesterfolie nach Anspruch 1 oder 2, **dadurch gekennzeichnet, dass** die Dicke der Polyesterfolie mindestens 10 $\mu$m und maximal 40 $\mu$m, bevorzugt mindestens 14 $\mu$m und maximal 23 $\mu$m, besonders bevorzugt mindestens 14,5 $\mu$m und maximal 20 $\mu$m beträgt.

4. Polyesterfolie nach einem oder mehreren der Ansprüche 1 bis 3, **dadurch gekennzeichnet, dass** die Basisschicht B zu mindestens 70 Gew.-% aus dem thermoplastischen Polyester besteht, wobei der thermoplastische Polyester zu mindestens 85 Mol-%, bevorzugt mindestens 90 Mol-%, besonders bevorzugt zu mindestens 92 Mol-% aus von Ethylenglykol- und Terephthalsäure abgeleiteten Einheiten besteht.

5. Polyesterfolie nach einem oder mehreren der Ansprüche 1 bis 4, **dadurch gekennzeichnet, dass** die Polyesterfolie einen SV-Wert von größer 600, bevorzugt von größer 650, besonders bevorzugt von größer 700 aufweist, wobei der SV-Wert der Folie kleiner als 950, bevorzugt kleiner als 850 ist.

6. Polyesterfolie nach einem oder mehreren der Ansprüche 1 bis 5, **dadurch gekennzeichnet, dass** der UV-Stabilisator ausgewählt ist aus der Gruppe bestehend aus Triazine, Benzotriazole, Benzoxazinone, wobei Triazine bevorzugt sind, wobei die Basisschicht B, und falls vorhanden, die Schicht A und die Schicht C den UV-Stabilisator in einer Menge von 0,3 bis 3 Gew.-%, bevorzugt von 0,75 bis 2,8 Gew.-% enthalten, bezogen auf das Gewicht der jeweiligen Schicht.

7. Polyesterfolie nach einem oder mehreren der Ansprüche 1 bis 6, **dadurch gekennzeichnet, dass** auf der ersten oder der zweiten Oberflächen der Polyesterfolie eine Antifog-Beschichtung aufgebracht ist und die der Antifog-Beschichtung gegenüberliegenden Oberfläche der Polyesterfolie eine Antirefex-Modifikation aufweist, die

   (1) eine Antireflexbeschichtung ist, oder
   (2) durch eine Deckschichtmodifikation gebildet wird.

8. Polyesterfolie nach einem oder mehreren der Ansprüche 1 bis 7, **dadurch gekennzeichnet, dass** die Deckschichtmodifikation durch Co-Extrusion auf der Basisschicht B gebildet wird, wobei die Deckschichtmodifikation einen Polyester umfasst, der einen geringeren Brechungsindex als der Polyester der Basisschicht B aufweist,

9. Polyesterfolie nach einem oder mehreren der Ansprüche 1 bis 7, **dadurch gekennzeichnet, dass** das Polymer der Deckschichtmodifikation einen Co-Monomeranteil von mindestens 2 Mol-%, bevorzugt mindestens 3 Mol-% und besonders bevorzugt mindestens 6 Mol-% enthält.

10. Polyesterfolie nach einem oder mehreren der Ansprüche 1 bis 9, **dadurch gekennzeichnet, dass** die Antifog-Beschichtung eine Dicke von mindestens 60 nm und maximal 150 nm, bevorzugt mindestens 70 nm und maximal 130 nm, besonders bevorzugt von mindestens 80 nm und maximal 120 nm aufweist.

11. Polyesterfolie nach einem oder mehreren der Ansprüche 8 bis 9, **dadurch gekennzeichnet, dass** die Antifog-Beschichtung eine Dicke von mindestens 30 nm und bevorzugt mindestens 40 nm und besonders bevorzugt mindestens 50 nm und maximal 60 nm aufweist.

12. Verfahren zur Herstellung einer beschichteten Polyesterfolie nach einem oder mehreren der Ansprüche 1 bis 11, **dadurch gekennzeichnet, dass** die Polyesterfolie mittels Extrusion hergestellt und biaxial gestreckt wird, eine Antifog Beschichtungsmasse In-Line nass an die Polyesterfolie angetragen wird, und die beschichtete Polyesterfolie thermofixiert und aufgerollt wird.

13. Verfahren zur Herstellung einer beschichteten Polyesterfolie nach einem oder mehreren der Ansprüche 1 bis 10, **dadurch gekennzeichnet, dass** Polyesterfolie mittels Extrusion hergestellt, biaxial gestreckt, thermofixiert und aufgerollt wird, anschließend offline mittels üblicher Beschichtungstechnologie eine Antifog-Beschichtungszusammensetzung an die Polyesterfolie nass angetragen wird, und die Polyesterfolie anschließend getrocknet und aufgewickelt wird.

14. Verwendung der beschichteten Polyesterfolie nach einem der Ansprüche 1 bis 11 als hochtransparente Konvektionssperre.

15. Verwendung der beschichteten Polyesterfolie nach einem der Ansprüche 1 bis 11 zur Herstellung von Energiesparmatten in Gewächshäusern.

**Claims**

1. Coated polyester film with transparency of at least 93 %, measured according to ASTM-D 1003-61 (method A), comprising:

   at least one base layer B which comprises a thermoplastic polyester and a UV stabilizer;
   where the polyester film has a first and a second surface, where a permanent antifog coating has been applied on at least one of the surfaces of the polyester film, and where the refractive index of the antifog coating is lower than that of the base layer B and where the antifog coating is the reaction product of a dispersion of an antifog-coating composition that comprises, alongside water, a) hygroscopic, porous material, b) a crosslinking agent based on polymer, c) an adhesion-promoting organofunctional silane and d) one or more surfactants.

2. Polyester film according to Claim 1, **characterized in that** the polyester film is a multilayer film and comprises a layer A which has been applied on the base layer, or comprises a layer A and a layer C, where the base layer B is arranged between the layer A and the layer C, and where the layers A and C comprise a thermoplastic polymer and a UV stabilizer.

3. Polyester film according to Claim 1 or 2, **characterized in that** the thickness of the polyester film is at least 10 $\mu$m and at most 40 $\mu$m, preferably at least 14 $\mu$m and at most 23 $\mu$m, particularly preferably at least 14.5 $\mu$m and at most 20 $\mu$m.

4. Polyester film according to one or more of Claims 1 to 3, **characterized in that** at least 70 % by weight of the base layer B consists of the thermoplastic polyester, where at least 85 mol %, preferably at least 90 mol %, particularly preferably at least 92 mol %, of the thermoplastic polyester consists of ethyleneglycol- and terephthalic-acid-derived units.

5. Polyester film according to one or more of Claims 1 to 4, **characterized in that** the SV value of the polyester film is greater than 600, preferably greater than 650, particularly preferably greater than 700, where the SV value of the film is less than 950, preferably less than 850.

6. Polyester film according to one or more of Claims 1 to 5, **characterized in that** the UV stabilizer is selected from the group consisting of triazines, benzotriazoles, and benzoxazinones, preference being given to triazines, where the base layer B and, if present, the layer A and the layer C comprise a quantity of from 0.3 to 3 % by weight of the UV stabilizer, preferably from 0.75 to 2.8 % by weight, based on the weight of the respective layer.

7. Polyester film according to one or more of Claims 1 to 6, **characterized in that** an antifog coating has been applied on the first or the second surface of the polyester film and that surface of the polyester film that is opposite to the antifog coating has an antireflective modification which

(1) is an antireflective coating, or

(2) is formed via an outer-layer modification.

8. Polyester film according to one or more of Claims 1 to 7, **characterized in that** the outer-layer modification is formed via coextrusion on the base layer B, where the outer-layer modification comprises a polyester having a lower refractive index than the polyester of the base layer B.

9. Polyester film according to one or more of Claims 1 to 7, **characterized in that** the comonomers content of the polymer of the outer-layer modification is at least 2 mol %, preferably at least 3 mol % and particularly preferably at least 6 mol %.

10. Polyester film according to one or more of Claims 1 to 9, **characterized in that** the thickness of the antifog coating is at least 60 nm and at most 150 nm, preferably at least 70 nm and at most 130 nm, particularly preferably at least 80 nm and at most 120 nm.

11. Polyester film according to one or more of Claims 8 to 9, **characterized in that** the thickness of the antifog coating is at least 30 nm and preferably at least 40 nm and particularly preferably at least 50 nm and at most 60 nm.

12. Process for the production of a coated polyester film according to one or more of Claims 1 to 11, **characterized in that**, by means of extrusion, the polyester film is produced and biaxially stretched, an antifog-coating composition is in-line wet applied to the polyester film, and the coated polyester film is heat-set and wound up.

13. Process for the production of a coated polyester film according to one or more of Claims 1 to 10, **characterized in that**, by means of extrusion, polyester film is produced, biaxially stretched, heat-set and wound up, and then, by means of conventional coating technology, an antifog-coating composition is offline wet applied to the polyester film, and the polyester film is then dried and wound up.

14. Use of the coated polyester film according to any of Claims 1 to 11 as high-transparency convection barrier.

15. Use of the coated polyester film according to any of Claims 1 to 11 for the production of energy-saving mats in greenhouses.

**Revendications**

1. Film de polyester revêtu présentant une transparence d'au moins 93 %, mesurée selon l'ASTM-D 1003-61 (procédé A), comprenant :

au moins une couche de base B, qui comprend un polyester thermoplastique et un stabilisant UV ;
le film de polyester présentant une première et une seconde surfaces, un revêtement antibuée permanent étant appliqué sur au moins l'une des surfaces du film de polyester, et le revêtement antibuée présentant un indice de réfraction plus faible que celui de la couche de base B et le revêtement antibuée étant le produit réactionnel d'une dispersion d'une composition de revêtement antibuée, qui outre de l'eau, contient a) un matériau poreux hygroscopique, b) un agent de réticulation à base de polymère, c) un silane organofonctionnel favorisant l'adhérence et d) un ou plusieurs tensioactifs.

2. Film de polyester selon la revendication 1, **caractérisé en ce que** le film de polyester est un film à plusieurs couches et comprend une couche A, qui est appliquée sur la couche de base, ou comprend une couche A et une couche C, la couche B étant disposée entre la couche A et la couche C, et les couches A et C comprenant un polymère thermoplastique et un stabilisant UV.

3. Film de polyester selon la revendication 1 ou 2, **caractérisé en ce que** l'épaisseur du film de polyester est au minimum de 10 μm et au maximum de 40 μm, de préférence au minimum de 14 μm et au maximum de 23 μm, de manière particulièrement préférée au minimum de 14,5 μm et au maximum de 20 μm.

4. Film de polyester selon l'une ou plusieurs des revendications 1 à 3, **caractérisé en ce que** la couche de base B se compose d'au moins 70 % en poids de polyester thermoplastique, le polyester thermoplastique se composant d'au moins 85 % en moles, de préférence d'au moins 90 % en moles, de manière particulièrement préférée d'au moins 92 % en moles d'unités dérivées d'acides d'éthylène glycol et téréphtalique.

5. Film de polyester selon l'une ou plusieurs des revendications 1 à 4, **caractérisé en ce que** le film de polyester présente une valeur SV supérieure à 600, de préférence supérieure à 650, de manière particulièrement préférée supérieure à 700, la valeur SV du film étant inférieure à 950, de préférence inférieure à 850.

6. Film de polyester selon l'une ou plusieurs des revendications 1 à 5, **caractérisé en ce que** le stabilisant UV est choisi dans le groupe consistant en triazine, benzotriazole, benzoxazinone, les triazines étant préférées, la couche de base B, et le cas échéant, la couche A et la couche C contenant le stabilisant UV en une quantité allant de 0,3 à 3 % en poids, de préférence de 0,75 à 2,8 % en poids, par rapport au poids de la couche respective.

7. Film de polyester selon l'une ou plusieurs des revendications 1 à 6, **caractérisé en ce qu'**un revêtement antibuée est appliqué sur la première ou la seconde surface du film de polyester et la surface opposée au revêtement antibuée du film de polyester présente une modification antireflet, qui

   (1) est un revêtement antireflet, ou
   (2) est formée par une modification de couche de recouvrement.

8. Film de polyester selon l'une ou plusieurs des revendications 1 à 7, **caractérisé en ce que** la modification de couche de recouvrement est formée par co-extrusion sur la couche de base B, la modification de couche de recouvrement comprenant un polyester, qui présente un indice de réfraction plus faible que celui du polyester de la couche de base B.

9. Film de polyester selon l'une ou plusieurs des revendications 1 à 7, **caractérisé en ce que** le polymère de la modification de couche de recouvrement contient une proportion de comonomère d'au moins 2 % en moles, de préférence d'au moins 3 % en moles et de manière particulièrement préférée d'au moins 6 % en moles.

10. Film de polyester selon l'une ou plusieurs des revendications 1 à 9, **caractérisé en ce que** le revêtement antibuée présente une épaisseur au minimum de 60 nm et au maximum de 150 nm, de préférence au minimum de 70 nm et au maximum de 130 nm, de manière particulièrement préférée au minimum de 80 nm et au maximum de 120 nm.

11. Film de polyester selon l'une ou plusieurs des revendications 8 à 9, **caractérisé en ce que** le revêtement antibuée présente une épaisseur d'au moins 30 nm et de préférence d'au moins 40 nm et de manière particulièrement préférée au minimum de 50 nm et au maximum de 60 nm.

12. Procédé de fabrication d'un film de polyester revêtu selon l'une ou plusieurs des revendications 1 à 11, **caractérisé en ce que** le film de polyester est fabriqué par extrusion et étiré de manière biaxiale, une masse de revêtement antibuée est appliquée en ligne à l'état mouillé sur le film de polyester, et le film de polyester revêtu est thermofixé et enroulé.

13. Procédé de fabrication d'un film de polyester revêtu selon l'une ou plusieurs des revendications 1 à 10, **caractérisé en ce que** le film de polyester est fabriqué par extrusion, étiré de manière biaxiale, thermofixé et enroulé, puis une composition de revêtement antibuée est appliquée à l'état mouillé hors ligne au moyen d'une technologie de revêtement courante sur le film de polyester, et le film de polyester est ensuite séché et enroulé.

14. Utilisation du film de polyester revêtu selon l'une quelconque des revendications 1 à 11 en tant que barrière de convection hautement transparente.

15. Utilisation du film de polyester revêtu selon l'une quelconque des revendications 1 à 11 pour la fabrication de tapis à économie d'énergie dans des serres.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 1995018210 A
- WO 9722655 A1
- EP 1647568 B1
- EP 1777251 B1
- EP 1152027 A1
- EP 1534776 A1
- EP 2216362 A1
- EP 1368405 B1
- EP 0144948 A
- EP 0769540 A
- DE 69833711
- DE 69731750
- WO 9806575 A
- EP 1777251 A1

### In der Beschreibung aufgeführte Nicht-Patentliteratur

- Overview of variable-angle spectroscopic ellipsometry (VASE): I. Basic theory and typical applications. **J. A. WOOLLAM et al.** Proc. SPIE Vol. CR72, p. 3-28, Optical Metrology. vol. CR72, 3-28